(19) Europäisches Patentamt
European Patent Office
Office européen des brevets

(11) Veröffentlichungsnummer: **0 139 248**
**A2**

# (12) EUROPÄISCHE PATENTANMELDUNG

(21) Anmeldenummer: **84111465.5**

(22) Anmeldetag: **26.09.84**

(51) Int. Cl.⁴: **C 09 B 62/20**
D 06 P 1/382

(30) Priorität: **04.10.83 DE 3335987**

(43) Veröffentlichungstag der Anmeldung:
**02.05.85 Patentblatt 85/18**

(84) Benannte Vertragsstaaten:
**BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Schündehütte, Karl Heinz, Prof. Dr.**
**Klief 75**
**D-5090 Leverkusen 3(DE)**

(72) Erfinder: **Klauke, Erich, Dr.**
**Eichendorffweg 8**
**D-5068 Odenthal(DE)**

(54) **Reaktivfarbstoffe.**

(57) Es werden neue Reaktivfarbstoffe der Formel

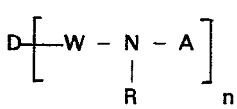

(I)

bereitgestellt, worin
D = Rest eines organischen Farbstoffs
W = direkte Bindung oder Brückenglied
R = H oder Alkyl
n = 1 oder 2
A = Rest der Formel

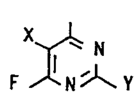

(II)

worin
X = H, F, Cl, Br und

Y = $CF_3$ oder 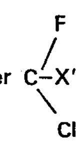 worin X' = H, F, Cl, Br.

BAYER AKTIENGESELLSCHAFT 5090 Leverkusen, Bayerwerk

Konzernverwaltung RP
Patentabteilung Er/ABc

## Reaktivfarbstoffe

Die vorliegende Erfindung betrifft neue Reaktivfarbstoffe der Formel

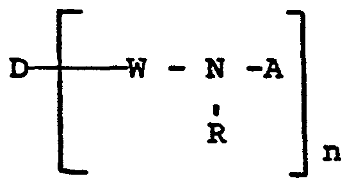

(I)

worin

D = Rest eines organischen Farbstoffs
W = direkte Bindung oder Brückenglied
R = H oder Alkyl
n = 1 oder 2
A = Rest der Formel

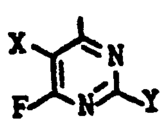

(II)

0139248

worin

X = H, F, Cl, Br und

Y = $CF_3$ oder 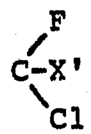 worin X' = H, F, Cl, Br

mit der Maßgabe, daß falls Y = $CF_3$ ist, X für F steht.

Geeignete Reste A sind beispielsweise die der folgenden Formeln III (a bis k):

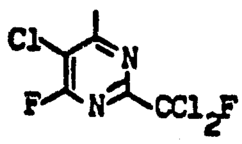
a

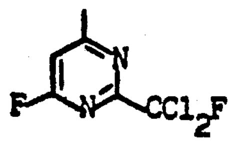
b

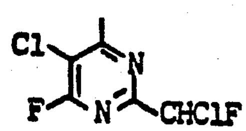
c

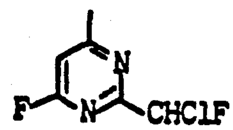
d

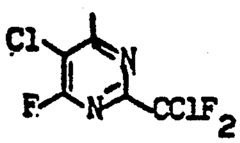
e

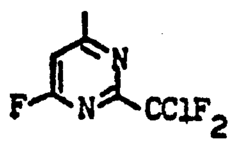
f

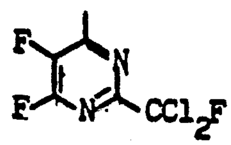
g

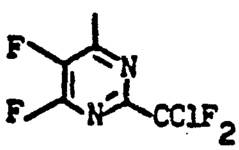
h

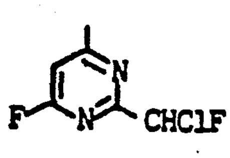
i

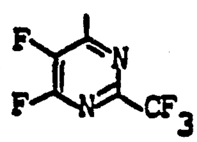
k

(III)

Als Reste D seien beispielsweise genannt: solche der Monoazo-, Polyazo-, Metallkomplexazo-, Anthrachinon-,

Phthalocyanin-, Formazan-, Azomethin-, Dioxazin-, Phenazin-, Stilben-, Triphenylmethan-, Xanthen-, Thioxanthon- oder Nitroarylreihe. Insbesondere kommt als Rest eines organischen Farbstoffs ein solcher in Frage, der eine oder mehrere wasserlöslichmachende Gruppen, insbesondere Sulfogruppen enthält.

Für die in der vorliegenden Anmeldung genannten Alkyl-, Aryl-, Aralkyl-, Hetaryl-, Alkoxy-, Halogen- und Acylaminoreste sowie für die Brückenglieder gilt folgendes:

Unter Alkylgruppen werden insbesondere solche mit 1-4 C-Atomen verstanden, die gegebenenfalls Substituenten aufweisen können, beispielsweise Halogen wie Cl oder Br, OH oder CN.

Unter Arylgruppen werden insbesondere Phenylreste verstanden, die gegebenenfalls Substituenten aufweisen, beispielsweise Halogen wie Cl und Br, $C_1$-$C_4$-Alkyl, $C_1$-$C_4$-Alkoxy, $C_1$-$C_4$-Alkylsulfonyl, $NO_2$, CN, $CF_3$, $SO_3H$, COOH.

Unter Aralkylresten werden insbesondere Benzylreste verstanden, die gegebenenfalls die für die Phenylreste genannten Substituenten aufweisen können.

Geeignete Hetarylreste sind beispielsweise Thienyl, Benzthienyl, Benzthiazolyl, Benzimidazolyl, Pyridyl, Pyrimidyl, Benzofuranyl, Indolyl, Chinolyl, Carbazyl, Chinoxalyl, Benztriazolyl.

0139248

Unter Alkoxyresten werden insbesondere solche mit 1-4 C-Atomen verstanden.

Unter Halogen wird insbesondere Chlor oder Fluor verstanden.

Unter Acylaminoresten werden insbesondere solche mit 1 bis 4 C-Atomen verstanden, wie Formylamino, Acetylamino, Propionylamino, n-Butylamino.

Geeignete Brückenglieder W sind beispielsweise:

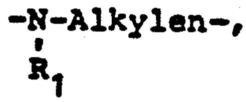

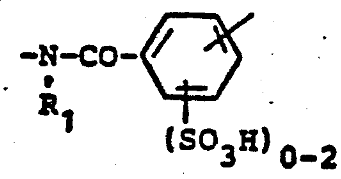

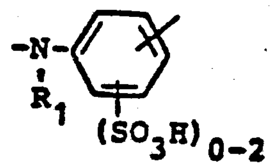

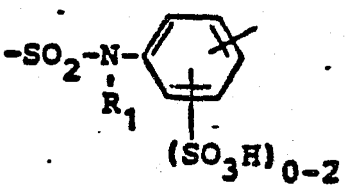

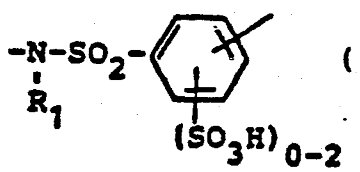

( IV )

-O-Alkylen-,

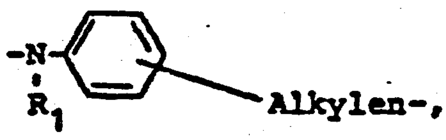

-S-Alkylen-, -Alkylen-, -Alkylen-CO-, -Alkylen-$SO_2$- ,

wobei $R_1$ für Wasserstoff oder Alkyl steht, und Alkylen einen Alkylenrest mit 1 bis 4 C-Atomen bedeutet.

Als Alkylenreste seien aufgeführt: $-CH_2-$, $-CH_2-CH_2-$, $-\underset{CH_3}{\underset{|}{CH}}-CH_2-$, $-(CH_2)_3-$, $-(CH_2)_4-$.

Die vorliegende Erfindung betrifft weiterhin die Herstellung der Reaktivfarbstoffe der Formel (I) nach an sich bekannten Methoden:

a) entweder durch Kondensation von Farbstoffen der Formel

$$D-[W-\underset{R}{\underset{|}{N}}-H]_n \qquad (V)$$

wobei D, W, R und n die oben angegebene Bedeutung besitzen,

mit n Mol eines Halogenpyridins der Formel

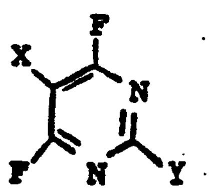

(VI)

worin X und Y die oben angegebene Bedeutung haben,

oder

b) durch Kondensation geeigneter Vorprodukte mit Verbindungen der Formel VI und anschließender Farbstoffsynthese.

Die Kondensationen der Ausgangskomponenten mit den substituierten Pyrimidinen der Formel VI erfolgt in wäßrigen oder organisch wäßrigen Medien bei 0-70°C in Anwesenheit von säurebindenden Mitteln wie Natriumcarbonat, Natriumbicarbonat oder verdünnter Natronlauge. Soll die Kondensation bzw. die Farbstoffsynthese direkt zu einer Farbstofflösung bzw. zu einer flüssigen Farbstoffpräparation führen, kann die Verwendung von Lithiumcarbonaten oder Lithiumhydroxyd vorteilhaft sein, gegebenenfalls zusammen mit Lösungsvermittlern und/oder stabilisierenden Puffersystemen. Andere Umwandlungsreaktionen der Farbstoffe oder deren Vorprodukte wie Metallisierungsreaktionen, Sulfierungen oder Einführung von Acylaminogruppierungen können im allgemeinen in beliebigen Stufen der Farbstoffsynthesen vorgenommen werden.

Die Reaktivfarbstoffe der Formel I eignen sich zum Färben und Bedrucken der verschiedensten Substrate wie Seide, Leder, Wolle, synthetischen Polyamidfasern, insbesondere aber cellulosehaltiger Materialien faseriger Struktur wie Leinen, Zellstoff, regenerierte Zellulose und vor allem Baumwolle. Sie eignen sich sowohl für das Ausziehverfahren als auch zum Färben nach den üblichen Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Die Reaktivfarbstoffe der Formel I zeichnen sich durch hohe Reaktivität und gutes Fixiervermögen aus. Sie können daher nach dem Ausziehverfahren bei niedrigen Färbetemperaturen eingesetzt werden und erfordern beim Klotz-Dämpf-Verfahren nur kurze Dämpfzeiten. Sie ergeben Färbungen mit guten Naß- und Lichtechtheiten und hoher Farbstärke und bemerkenswert hoher Faser-Farbstoff-Bindungsstabilität, sowohl im sauren und alkalischen Bereich als auch unter oxidativen Einflüssen.

Besonders wertvolle Farbstoffe dieser Reihe sind wasserlösliche Azo-, Formazan-, Anthrachinon- und Phthalocyanin-Farbstoffe, und insbesondere solche, die Sulfonsäure- und/oder Carbonsäuregruppen aufweisen. Dabei besitzen aber auch sulfon- und carbonsäuregruppenfreie reaktive Dispersionsfarbstoffe Interesse und Farbstoffe, deren Löslichkeit auf kationische Gruppierungen zurückzuführen ist. Die Farbstoffe können sowohl metallfrei als auch metallhaltig sein, wobei unter den Metallkomplexen die Kupfer-, Nickel-, Chrom- und Kobalt-Komplexe bevorzugtes Interesse besitzen.

Geeignete Farbstoffreste D bzw. die den Farbstoffen der Formel I zugrundeliegenden aminogruppenhaltigen Farbstoffe sind in der Literatur in sehr großer Zahl beschrieben. Beispielhaft seien hier erwähnt:

EP-A 54515, EP-A 69703, EP-A 70807, DE-A 3 222 726, DE-A 2 650 555, DE-A 3 023 855, DE-A 2 847 938, DE-A 2 817 780, GB-A 2 057 479, DE-A 2 916 715, DE-A 2 814 206, DE-A 3 019 936, EP-A 45488 sowie

Venkataraman: The Chemistry of Synthetic Dyes, BD. VI, Kapitel II, S. 211-325, New York, London; 1972.

Wichtige Azofarbstoffe sind beispielsweise solche der Benzol-azo-naphthalinreihe, der Bis(Benzolazo)-naphthalinreihe, der Benzol-azo-5-pyrazolonreihe, der Benzol-azo-benzolreihe, der Naphthalin-azo-benzolreihe, der Benzol-azo-aminonaphthalinreihe, der Naphthalin-azo-naphthalinreihe, der Naphthalin-azo-pyrazolon-5-Reihe, der Benzol-azo-pyridonreihe, der Benzol-azo-aminopyridinreihe, der Naphthalin-azo-pyridonreihe, der Naphthalin-azo-amino-pyridinreihe, und der Stilben-azo-benzolreihe, wobei auch hier die sulfonsäuregruppenhaltigen Farbstoffe bevorzugt sind. Im Falle von Metallkomplexazofarbstoffen befinden sich die metallkomplexgebundenen Gruppen vorzugsweise in den o-Stellungen zur Azogruppe, z.B. in Form von o,o'-Dihydroxy-, o-hydroxy-o'-carboxy-, o-Carboxy-o'-amino- und o-Hydroxy-o'-amino-azogruppierungen.

Bevorzugte Farbstoffe sind die der folgenden Formeln VII bis XXIII

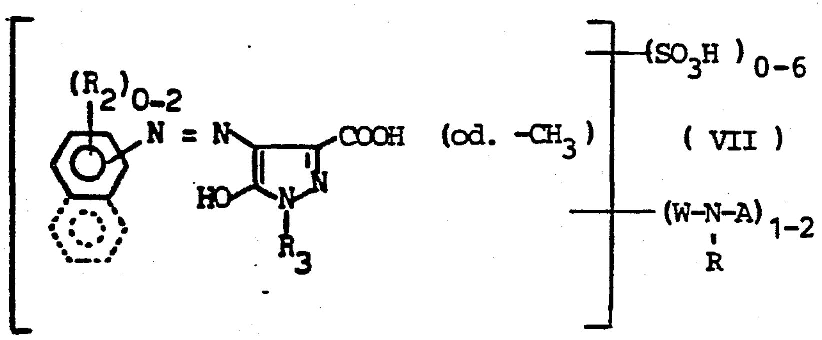

( VII )

$R_2$ = Alkyl, Alkoxy, Halogen,
$R_3$ = H, Alkyl, Aryl, Hetaryl, Aralkyl

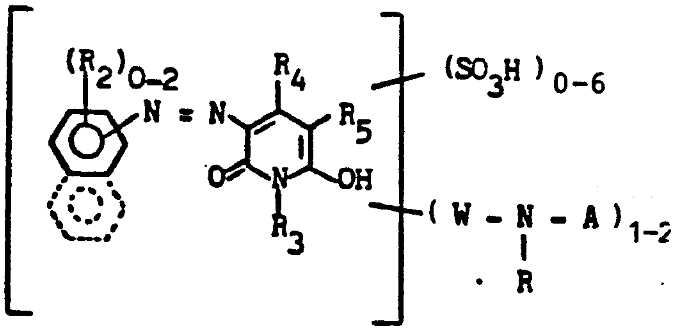

(VIII)

$R_4$ = Alkyl, Aryl, Aralkyl, Hetaryl, $R_5$

$R_5$ = H, $COOR_3$, 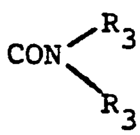 , CN, $CH_2-SO_3H$, $SO_3H$, 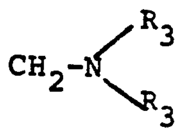

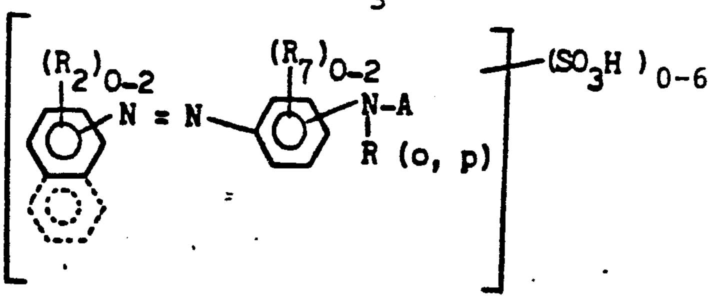

(IX)

$R_7$ = H, Alkyl, Alkoxy, Acylamino, Amino

o, p = in o- bzw. p-Stellung zur Azo-Gruppe

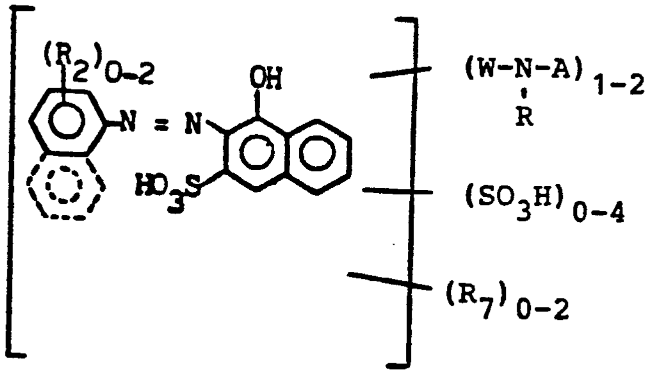

(X)

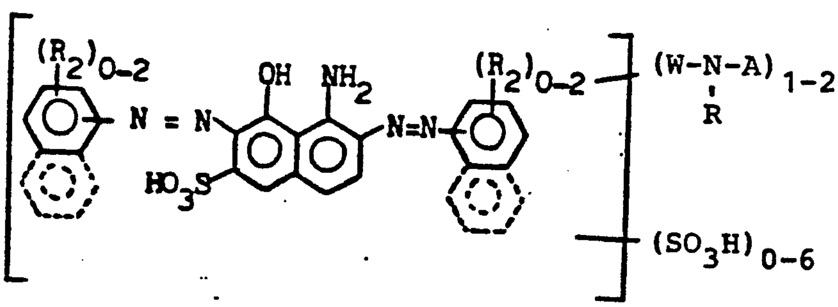

(XI)

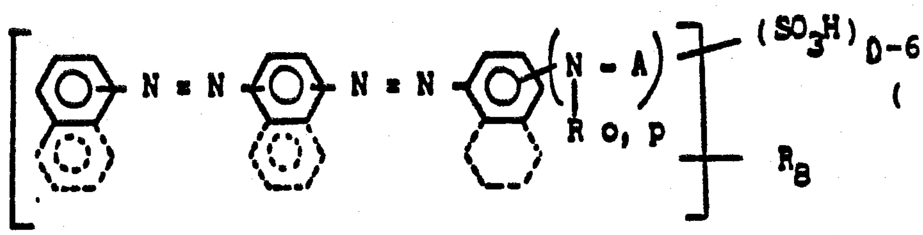

( XII)

$R_8$ = Halogen, Alkyl, Alkoxy, Acylamino, Amino, Hydroxy

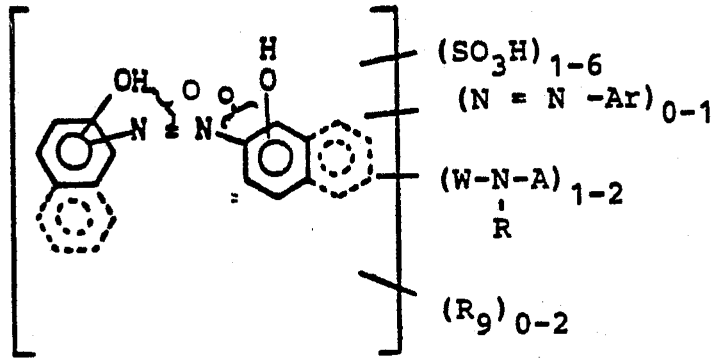

(XIII)

o = in ortho-Stellung zur Azogruppe

$R_9$ = $R_8$, $NO_2$

Azoderivate dieses Typs können zu 1:1 (Cu, Ni) oder 1:2 (Cr, Co)-Metallkomplexen (symmetrisch und unsymmetrisch) umgesetzt werden.

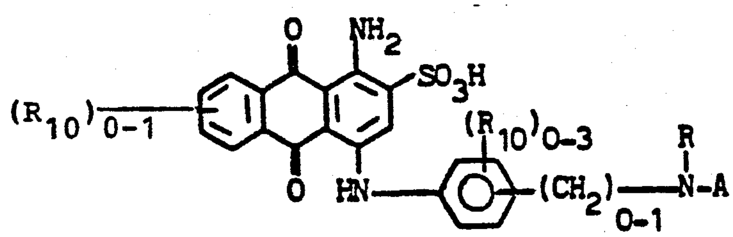

( XIV )

$R_{10}$ = $SO_3H$, Halogen, Alkyl, Alkoxy, COOH

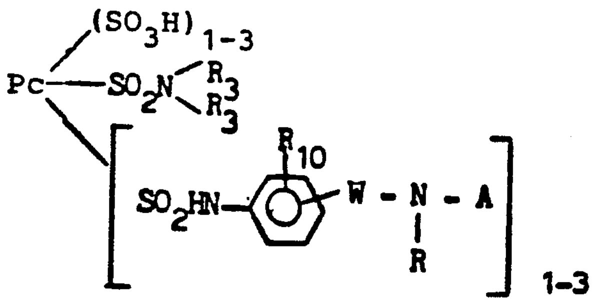

(XV)

Pc = Cu- oder Ni-Phthalocyaninrest

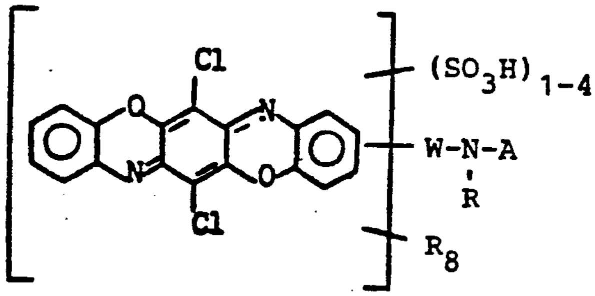

(XVI)

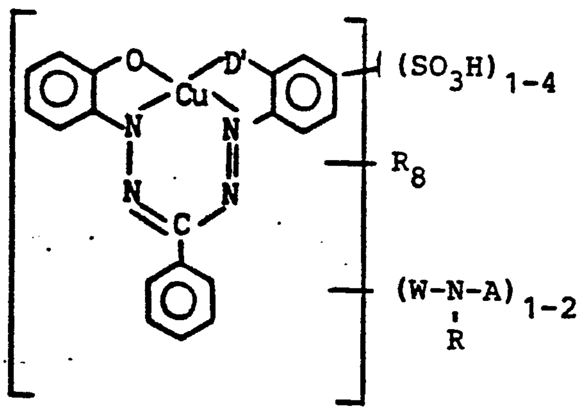

(XVII)

D' = zur Komplexbildung befähigter Substituent wie z.B. OH, COOH,

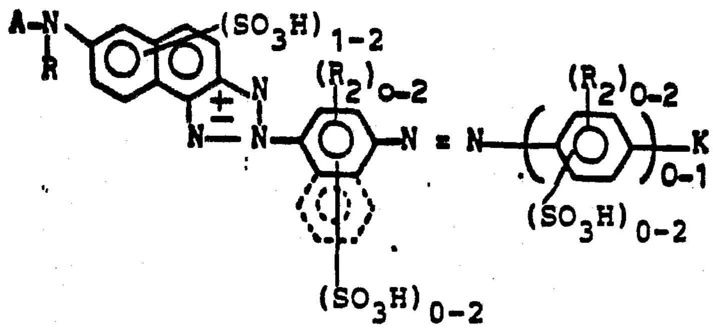

(XVIII)

K = Rest einer Kupplungskomponente, wobei als Kupplungs-Komponenten insbesondere solche der Pyridon-, Pyrazolon-, Acetessigsäurearylid- und Naphtholsulfonsäure-Reihe in Frage kommen.

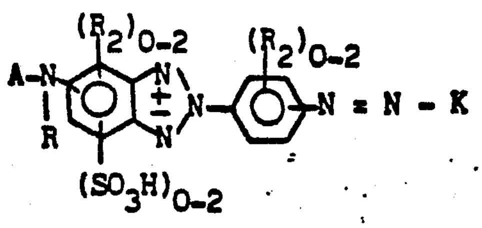

(XIX)

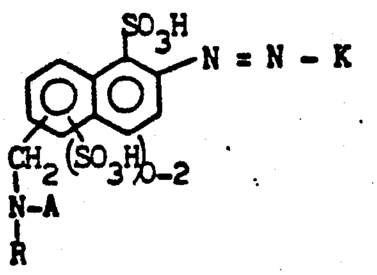

(XX)

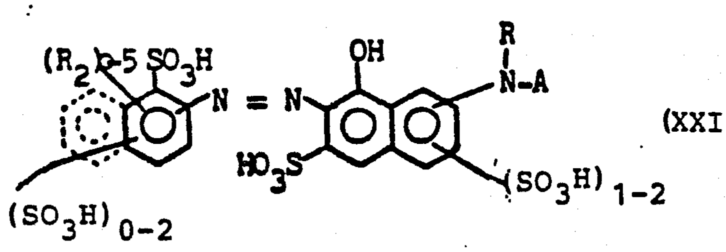

(XXI)

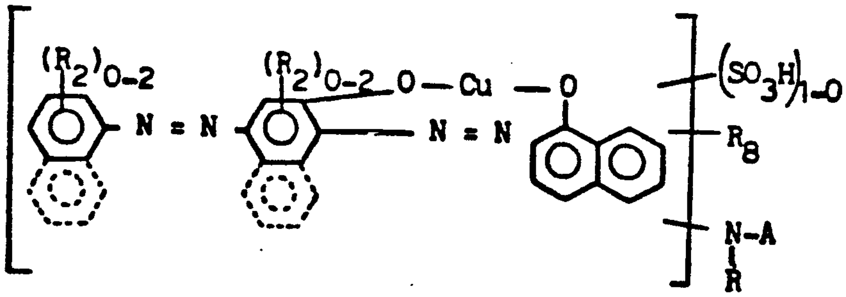

(XXII)

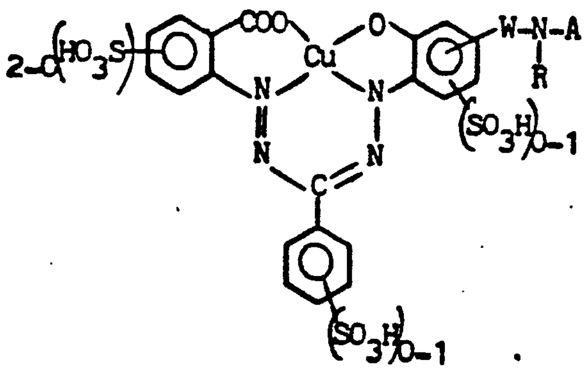

(XXIII)

Die vorliegende Erfindung betrifft weiterhin neue Verbindungen der Formel

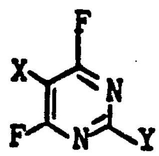

(XXIV)

worin X und Y die unter Formel II angegebene Bedeutung haben.

Die Erfindung betrifft weiterhin ein Verfahren zur Herstellung von Verbindungen der Formel

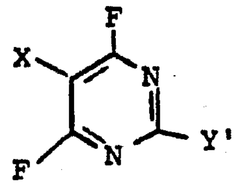

(XXIVa)

worin X die unter Formel II angegebene Bedeutung besitzt und Y' für $CFCl_2$ oder $CF_2Cl$ steht.

Das Verfahren ist dadurch gekennzeichnet, daß man

a) zum Erhalt von Verbindungen der Formel XXIVa worin Y' = $CFCl_2$ Verbindungen der Formel

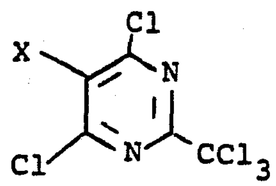

(XXVa)

mit Fluorwasserstoff unter Druck umsetzt und das entstehende Reaktionsgemisch durch physikalische Methoden (insbesondere durch Destillation) auftrennt,

b) zum Erhalt von Verbindungen der Formel XXIVa, worin Y' = $CF_2Cl$ Verbindungen der Formel

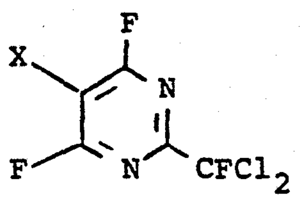

(XXVb)

mit Metallfluoriden, wie $SbF_3$ oder KF umsetzt und das entstehende Reaktionsgemisch durch physikalische Methoden (insbesondere durch Destillation) auftrennt.

Die Herstellung der Chlorpyrimidine ist z.B. durch Umsetzung der entsprechenden 4,5,6-Trihalogen-2-methylpyrimidine mit Chlor oder chlorabgebenden Mitteln bei höherer Temperatur möglich. So kann 4,5,6-Trichlor-2-trichlormethylpyrimidin durch Seitenkettenchlorierung von 4,5,6-Trichlor-2-methylpyrimidin mit Chlor bei 200°C und Bestrahlung mit einer UV-Lampe erhalten werden.

Bei dem im Anmeldungstext angegebenen Temperaturen handelt es sich um °C, bei den Prozentangaben um Gewichtsprozente.

Verbindungen der Struktur (XXIV), wobei X die in Formel (II) angegebene Bedeutung besitzt und Y für CHClF steht, sind beispielsweise durch Umsetzung entsprechender Pyrimidine, wobei Y = $CHCl_2$ mit Fluorwasserstoff und physikalischer Auftrennung des Reaktionsgemisches erhältlich.

Beispiel 1

2-Dichlorfluormethyl-4,6-difluor-5-chlor-pyrimidin

In einem Autoklaven aus rostfreiem Stahl mit Rührer und Rückflußkühler mit nachgeschaltetem Entspannungsventil werden 481 g 2-Trichlormethyl-4,5,6-trichlorpyrimidin und 600 ml HF vorgelegt. Der Autoklaveninhalt wird bis auf 140° geheizt. Die dabei entstehende HCl wird in der Weise entspannt, daß ein Innendruck von 25 bar aufrecht erhalten bleibt. Nach 2 h ist die HCl-Entwicklung beendet. Jetzt wird durch langsames Entspannen der Innendruck der Apparatur auf 20 bar abgesenkt, wobei gleichzeitig die Temperatur durch Nachheizen gehalten wird. Nach Erreichen der Druckkonstanz wird abgekühlt, der Restdruck entspannt und das Reaktionsgemisch durch Destillation aufgearbeitet.

Man erhält 275 g 2-Fluordichlormethyl-4,6-difluor-5-chlor-pyrimidin vom Kp.: 76°C/14 mbar, $n_D^{20}$ : 1.4854.

Beispiel 2

2-Trifluormethyl-4,5,6-trifluor-pyrimidin

In einem 500 ml Dreihalskolben werden 200 g 2-Trichlormethyl-4,6-difluor-5-chlor-pyrimidin vorgelegt und unter

Zugabe von 135 g Sb $F_3$ und 19 ml Sb $Cl_5$ langsam hochgeheizt und 45 Minuten bei der Rückflußtemperatur von 134°C gerührt. Der Ansatz wird abgekühlt, mit verdünnter Salzsäure gewaschen, der organische Anteil mit 300 ml $CH_2Cl_2$ aufgenommen und über $Na_2SO_4$ getrocknet. Durch Destillation gewinnt man daraus 119 g 2-Trifluormethyl-4,6-difluor-5-chlor-pyrimidin vom Kp 127°C, $n_D^{20}$: 1.4087.

In einem Druckgefäß aus Edelstahl werden 534 g 2-Trifluormethyl-4,6-difluor-5-chlor-pyrimidin mit 310 g KF (wasserfrei) in 640 ml Tetramethylensulfon vorgelegt und ein Stickstoffschutzdruck von 3 bar aufgegeben. Dann heizt man unter kräftigem Rühren bis auf 200°C und läßt 4 Stunden bei dieser Temperatur reagieren. Nach dem Abkühlen wird aus einer Glasapparatur destilliert. Ausbeute: 449 g 2-Trifluormethyl-4,5,6-trifluorpyrimidin
Kp: 98°C, $n_D^{20}$ : 1.3661.

Beispiel 2a

Herstellung des Ausgangsproduktes 2-Trichlormethyl-4,6-difluor-5-chlorpyrimidin.

In einem Rührgefäß mit Rührer und Rückflußkühler werden 240 ml Tetramethylensulfon wasserfr., 84 g Natriumfluorid und 200 g 2-Trichlormethyl-4,5,6-trichlorpyrimidin vorgelegt. In einer Stunde heizt man bis auf 170°C und rührt bei dieser Temperatur 3 Stunden nach. Durch Destillation und Redestillation isoliert man anschließend 137 g 2-Trichlormethyl-4,6-difluor-5-chlor-pyrimidin als wasserhelle Flüssigkeit vom Kp. 104-6°/ 18 mbar, $n_D^{20}$ : 1,5218. Das entspricht einer Ausbeute von 76,9 % der Theorie.

Beispiel 3

2-Difluorchlormethyl-4,6-difluor-5-chlor-pyrimidin

150 g 2-Fluordichlormethyl-4,6-difluor-5-chlor-pyrimidin läßt man in einer Glasapparatur mit 36 g Sb $F_3$ + 12 g Sb $Cl_5$ eine Stunde bei ca. 153-155°C reagieren. Anschließend wird abgekühlt, mit verdünnter Salzsäure gewaschen und der organische Anteil nach dem Trocknen abdestilliert. Man isoliert daraus 59 g 2-Difluorchlormethyl-4,6-difluor-5-chlor-pyrimidin als farblose Flüssigkeit von Kp 158°, $n_D^{20}$ : 1.4470.

Beispiel 4

19 Teile 1,3-Diaminobenzol-4-sulfonsäure werden in 250 Teilen Wasser angerührt und durch Zugabe von ca. 40 ml einer 20 %igen Natriumcarbonatlösung gelöst.

In diese Lösung werden bei ca. 35-40°C 25 Teile 2-Fluordichlormethyl-4,6-difluor-5-chlorpyrimidin gegeben. Bei 30-40°C wird unter kräftigem Rühren solange die freiwerdende Flußsäure durch Zutropfen einer Natriumcarbonatlösung neutralisiert bis sich der pH-Wert von

6-7 nicht mehr ändert. Das so erhaltene Kondensationsprodukt der Formel

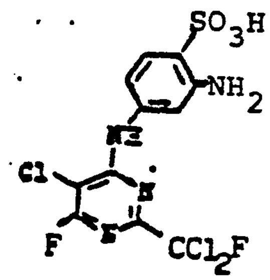

wird nach Zugabe von Eis und 7 Teilen Natriumnitrit mit 28 Teilen Salzsäure direkt diazotiert. In diese Suspension der Diazoniumverbindung werden 30 Gew.-Teile 1-/2'-Methyl-4'-sulfophenyl/-3-carboxypyrazolon-(5) gegeben und die Kupplung durch Zugabe von ca. 80 Teile einer Natriumcarbonatlösung (20 %ig) zu Ende geführt. Nach beendeter Kupplung wird die Abscheidung des Farbstoffs durch Zugabe von 200 Teilen Kaliumchlorid oder Natriumchlorid vervollständigt, anschließend wird durch Filtration isoliert und bei 50-80°C getrocknet. Man erhält ein gelbes Pulver, das Baumwolle in grünstichig gelben Tönen anfärbt bzw. bedruckt.

Die so erhaltenen Drucke oder Färbungen besitzen hervorragende Naßechtheiten.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluor-pyrimidin oder 2-Fluordichlor-

methyl-4,6-difluorpyrimidin und verfährt analog wie oben beschrieben, so erhält man Farbstoffe, die Wolle und Baumwolle in grünstichig gelben Tönen färben.

Weitere gelbe Farbstoffe mit ähnlichen Eigenschaften erhält man, wenn in diesem Beispiel das als Kupplungskomponenten eingesetzte 1-[2'-Methyl-4'-sulfophenyl]-3-carboxypyrazolon-(5) durch folgende Kupplungskomponenten ersetzt wird.

Acetessigsäure-[2'-methoxy-5'-methyl-4'-sulfonsäure]-anilid
Acetessigsäure-[2'-methoxy-5'-sulfonsäure]-anilid
3-Methylpyrazolon-(5)
1,3-Dimethylpyrazolon
1-(2',5'-disulfophenyl)-3-carboxypyrazolon-(5)
1-(2',5'-dichlor-4-sulfophenyl-3-methylpyrazolon-(5)
1-(2'-Chlor-5'-sulfophenyl)-3-methylpyrazolon.

## Beispiel 5

Die Lösung von 21 Teilen 1,3-Diamino-2-methylbenzol-5-sulfonsäure als Natriumsalz in 300 Teilen Wasser wird bei 35-45° unter kräftigem Rühren mit 25,0 Teilen 2-Fluordichlor-methyl-4,6-difluor-5-chlorpyrimidin kondensiert. Die freiwerdende Flußsäure wird dabei durch Zutropfen einer 20 %igen Sodalösung neutralisiert. Nach beendeter Kondensation wird das Umsetzungsprodukt durch Zugabe von Eis, 7 Teilen Natriumnitrit und 28 Teilen Salzsäure bei 5-10°C direkt diazotiert und anschließend durch Zugabe von 30 Gew.-Teilen 1-(2'-Methyl-4'-sulfophenyl)-3-carboxy-pyrazolon-(5) und ca. 80 Teilen einer 20 %igen Sodalösung zum Azofarbstoff der Formel

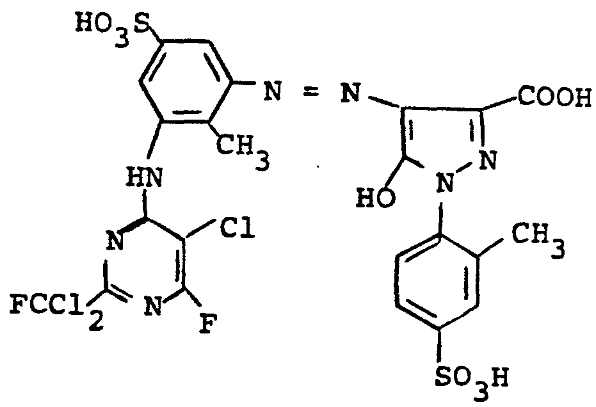

gekuppelt. Die Abscheidung des Farbstoffs wird durch Aussalzen mit 150 Teilen Natriumchlorid vervollständigt. Anschließend wird durch Filtration isoliert und bei 40-60°C getrocknet. Man erhält ein gelbes Pulver, das zum Bedrucken und Färben von Baumwolle hervorragend geeignet ist.

Ersetzt man in diesem Beispiel die Kupplungskomponente durch die im Beispiel 4 angegebenen Kupplungskomponenten, so werden ebenfalls gelbe Reaktivfarbstoffe mit sehr guten färberischen Eigenschaften erhalten.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in gelben Tönen färben.

Beispiel 6

19 Teile 1,4-Diaminobenzol-2-sulfonsäure werden als Natriumsalz in 250 Teilen Wasser bei 20°C gelöst und mit 25 Teilen 2-Fluordichlormethyl-4,6-difluor-5-chlorpyrimidin bei dieser Temperatur selektiv kondensiert. Durch Zugabe von 30 Teilen einer 20 %igen Sodalösung wird dabei ein pH-Wert von 5,8-6 eingehalten.

Nach beendeter Kondensation wird die Suspension durch Zugabe von Eis, 7 Teilen Natriumnitrit und 28 Teilen Salzsäure diazotiert.

Die Suspension der Diazoniumverbindung wird mit einer Lösung des Natriumsalzes von 29 Teilen 1-(4'-Sulfophenyl)-3-carboxypyrazolon-(5) in 150 Teilen Wasser versetzt und die Kupplung durch Zugabe von 50 Teilen einer 20 %igen Sodalösung zu Ende geführt. Danach wird mit 200 Teilen Kaliumchlorid ausgesalzen, isoliert und getrocknet. Man erhält so ein gelbes Pulver, das Baumwolle in goldgelben Farbtönen färbt. Der Farbstoff entspricht der Formel

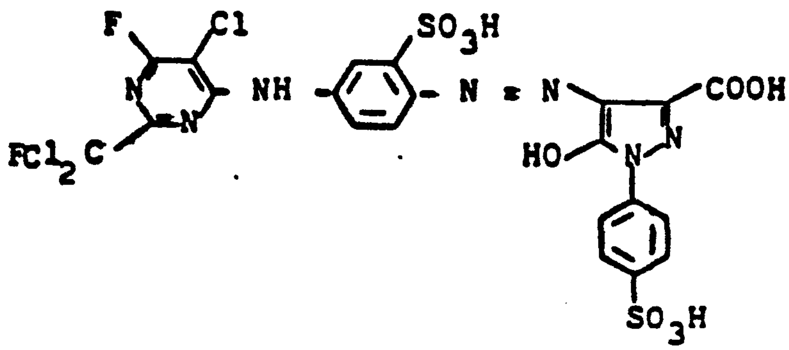

Ähnliche Farbtöne werden erhalten, wenn in diesem Beispiel das 1-(4'-Sulfophenyl)-3-carboxypyrazolon-(5) durch äquimolare Mengen der im Beispiel 4 angegebenen Pyrazole ersetzt wird.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in gelben Tönen färben.

Beispiel 7

19 Teile 1,3-Diaminobenzol-4-sulfonsäure werden wie in Beispiel 4 beschrieben mit 25 Teilen 2-Fluordichlormethyl-4,6-difluor-5-chlorpyrimidin zur Reaktion gebracht, diazotiert und mit 22 Teilen 1,4-Dimethyl-6-oxy-2-pyrimidon-3-sulfonsäure gekuppelt. Der entstehende Farbstoff der Formel

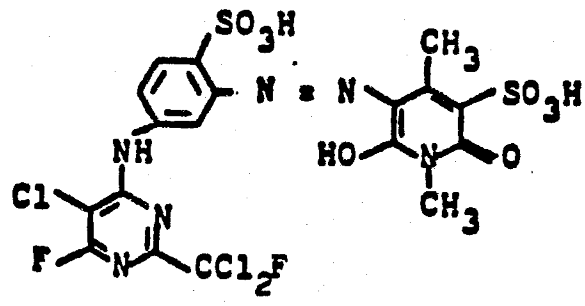

wird ausgesalzen und getrocknet. Er färbt Wolle und Baumwolle in reinen grünstichig gelben Nuancen.

Weitere gelbe Farbstoffe erhält man, wenn man die in der folgenden Tabelle Spalte 1 genannten Diazokomponenten mit 2-Fluordichlormethyl-4,6-difluor-5-chlorpyrimidin umsetzt und danach mit den in Spalte 2 genannten Kupplungskomponenten kuppelt.

| Beispiel | Diazokomponente | Kupplungskomponente | Farbton |
|---|---|---|---|
| 8 | 1,3-Diaminobenzol-4-sulfonsäure | 1-Ethyl-4-methyl-6-oxy-2-pyridon-3-carbonamid | grünstichig gelb |
| 9 | " | 1-Ethyl-4-methyl-6-oxy-2-pyridon-3-sulfonsäure | " |
| 10 | " | 1-Ethyl-4-methyl-6-oxy-2-pyridon-3-methansulfonsäure | " |
| 11 | " | 1,4-Dimethyl-6-oxy-2-pyridon-3-methansulfonsäure | " |
| 12 | " | 1(2'-Ethylsulfo)-4-methyl-6-oxy-2-pyridon-3-carbonamid | " |
| 13 | 1,5-Diaminobenzol-2,4-disulfonsäure | 1-Ethyl-4-methyl-6-oxy-2-pyridon-3-carbonamid | " |
| 14 | " | 1-Ethyl-4-methyl-6-oxy-2-pyridon-3-sulfonsäure | " |
| 15 | " | 1-Ethyl-4-methyl-6-oxy-2-pyridon-4-methansulfonsäure | " |

| Beispiel | Diazokomponente | Kupplungskomponente | Farbton |
|---|---|---|---|
| 16 | 1,5-Diaminobenzol-2,4-disulfonsäure | 1,4-Dimethyl-6-oxy-2-pyridon 3-methansulfonsäure | grünstichig gelb |
| 17 | " | 1(2'-Ethylsulfo)-4-methyl-6-oxy-pyridon-3-carbonamid | " |
| 18 | " | 1,4-Dimethyl-6-oxy-2-pyridon-3-sulfonsäure | " |
| 19 | 1,4-Diaminobenzol-4-sulfonsäure | " | " |
| 20 | " | 1-Ethyl-4-methyl-6-oxy-2-pyridon-4-carbonamid | " |
| 21 | " | 1-Ethyl-3-methyl-6-oxy-2-pyridon-3-sulfonsäure | " |
| 22 | " | 1-Ethyl-4-methyl-6-oxy-2-pyridon-3-methansulfonsäure | " |
| 23 | " | 1,4-Dimethyl-6-oxy-2-pyridon-2-methansulfonsäure | " |
| 24 | " | 1(2'-Ethylsulfo)-4-methyl-6-oxy-pyridon-3-carbonamid | " |

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluor-pyrimidin oder 2-Fluordichlormethyl-4,6-difluorpyrimidin und verfährt analog wie oben beschrieben, so erhält man Farbstoffe, die Wolle und Baumwolle in gelben bis grünstichig gelben Tönen färben.

Beispiel 25

20,2 Teile 3-Amino-N-methylbenzylamin-4-sulfonsäure werden in 200 ml Wasser heiß gelöst, auf 0,5°C abgekühlt und mit 35 ml konzentrierter Salzsäure versetzt. Man diazotiert mit 7 Teilen Natriumnitrit und tropft die Suspension des Diazoniumsalzes in eine neutrale Lösung von 25 Teilen 1-Ethyl-4-methyl-6-oxy-2-pyridon-3-methansulfonsäure. Mit 80 Teilen einer 20 %igen Natriumcarbonatlösung wird die Kupplung zu Ende geführt. Der Farbstoff wird mit Natrium- oder Kaliumchlorid ausgesalzen und filtriert. Man löst den erhaltenen Filterkuchen in 500 ml Wasser und tropft bei 40°C langsam 25,0 Teile 2-Fluordichlormethyl-4,6-difluor-5-chlorpyrimidin zu. Es wird so lange gerührt, bis sich der pH-Wert von 7-8 nach Neutralisation der freiwerdenden Flußsäure nicht mehr ändert. Der erhaltene Farbstoff der Formel

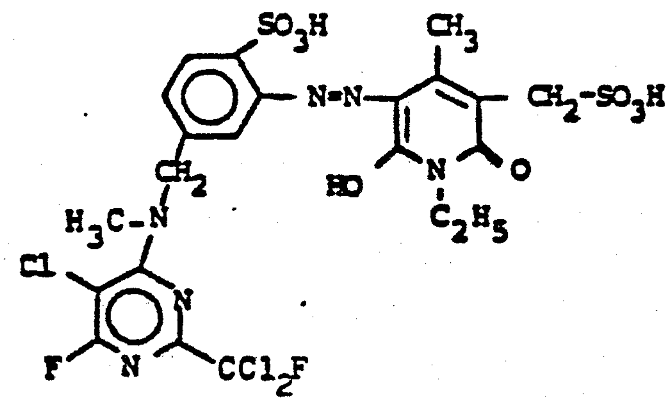

wird ausgesalzen, isoliert und getrocknet. Man erhält ein gelbes Pulver, das Baumwolle in grünstichig gelben Tönen färbt.

Weitere grünstichig gelbe Farbstoffe mit ähnlichen Eigenschaften erhält man, wenn man 1-Ethyl-4-methyl-6-oxy-2-pyridon-3-methansulfonsäure durch die in der folgenden Tabelle genannten Kupplungskomponente ersetzt und sonst wie in Beispiel 25 beschrieben verfährt.

| Beispiel | Diazokomponente | Kupplungskomponente | Farbton |
|---|---|---|---|
| 26 | 3-Amino-N-methyl-benzylamin-4-sulfonsäure | 1,4-Dimethyl-6-oxy-2-pyridon-3-methylsulfonsäure | grünstichig gelb |
| 27 | " | 1(2'-Ethylsulfo)-4-methyl-6-oxy-pyridon-3-carbonamid | " |
| 28 | " | 1-Ethyl-4-methyl-6-oxy-2-pyridon-3-carbonamid | " |

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in grünstichig gelben Tönen färben.

Beispiel 29

23,9 Teile 2-Amino-5-hydroxynaphthalin-7-sulfonsäure werden in 200 ml Wasser neutral gelöst. In diese Lösung werden bei ca. 20-30°C 25 Teile 2-Fluordichlormethyl-4,6-difluor-5-chlorpyrimidin gegeben. Unter kräftigem Rühren wird solange die freiwerdende Flußsäure durch Zutropfen von Natriumcarbonatlösung neutralisiert, bis sich der pH-Wert von 5,5-6,0 nicht mehr ändert.

Die Suspension des Kondensationsproduktes wird mit der nach üblichen Methoden hergestellten Suspension einer Diazoniumverbindung aus 2-Naphthylamin-1,5-disulfonsäure vereinigt und die Kupplung durch Zugabe von 10 Teilen Lithiumcarbonat zu Ende geführt. Der orangefarbene Reaktivfarbstoff der Formel

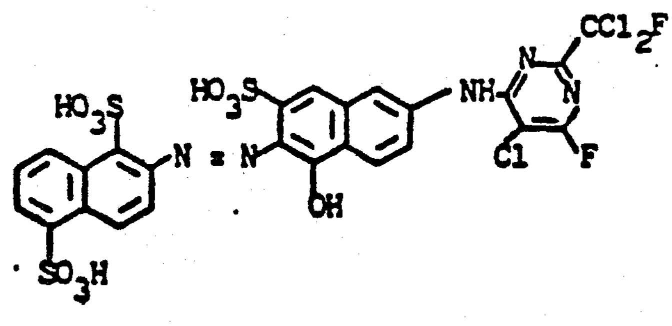

wird ausgesalzen, isoliert und getrocknet. Man erhält ein orangefarbenes Pulver, das zum Färben und Bedrucken von Baumwolle nach den für Reaktivfarbstoffen üblichen Verfahren hervorragend geeignet ist.

Wird das in diesem Beispiel beschriebene Kondensationsprodukt aus 2-Fluordichlormethyl-4,6-difluor-5-chlorpyrimidin und 2-Amino-5-hydroxy-naphthalin-7-sulfonsäure nach an sich bekannten Methoden mit den Diazoniumverbindungen aus den nachfolgend aufgeführten Aminen gekuppelt, so werden ebenfalls hervorragende Reaktivfarbstoffe mit den angegebenen Farbtönen erhalten:

| Beispiel | Diazoniumverbindung aus: | Farbton |
|---|---|---|
| 30 | 2-Aminonaphthalin-1,5,7-trisulfonsäure | Orange |
| 31 | Anilin-2-sulfonsäure | Orange |
| 32 | 1-Amino-3-acetylaminobenzol-6-sulfonsäure | Orange |
| 33 | 1-Amino-5(2'-(2"-sulfophenylamino)-4'-fluortriazin-1',3',5'-yl-5')-aminobenzol-2-sulfonsäure | Orange |
| 34 | 1-Amino-4-methoxybenzol-2-sulfonsäure | Scharlach |
| 35 | 1-Amino-4-methoxybenzol-2,5-disulfonsäure | Scharlach |
| 36 | 2-Aminonaphthalin-3,6,8-trisulfonsäure | Scharlach |
| 37 | 2-Aminonaphthalin-4,6-8-trisulfonsäure | Scharlach |
| 38 | 2-Aminonaphthalin-1-sulfonsäure | Orange |
| 39 | 1-Amino-4-methoxybenzol-3-sulfonsäure | Scharlach |
| 40 | Anilin-4-sulfonsäure | Orange |
| 41 | 1-Amino-4-ethoxybenzol-2-sulfonsäure | Scharlach |

Verwendet man anstelle von 2-Fluordichlormethyl-4,6-difluor-5-chlor-pyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in den für den jeweiligen aus 2-Fluordichlormethyl-4,6-difluor-5-chlor-pyrimidin erhaltenen Farbstoffen angegebenen Tönen färben.

Beispiel 41

In die Lösung von 32 Gew.-Teilen 1-Amino-8-hydroxynaphthalin-3,6-disulfonsäure als Natriumsalz in 300 Teilen

Wasser werden unter starkem Rühren bei 20-25°C 25 Teile 2-Fluordichlormethyl-4,6-difluor-5-chlorpyrimidin getropft und dabei die freiwerdende Säure durch verdünnte Natronlauge oder Sodalösung neutralisiert. Nach etwa einer Stunde ist die Kondensation unter diesen Bedingungen beendet. Das so erhaltene Kondensationsprodukt wird dann mit der üblichen Methode zu erhaltenden Diazoniumverbindung aus 0,1 Mol Anilin-2-sulfonsäure vereinigt und die Kupplung bei pH 7 zu Ende geführt. Nach Aussalzen, Isolieren und Trocknen erhält man ein dunkles Pulver des Farbstoffs der Formel

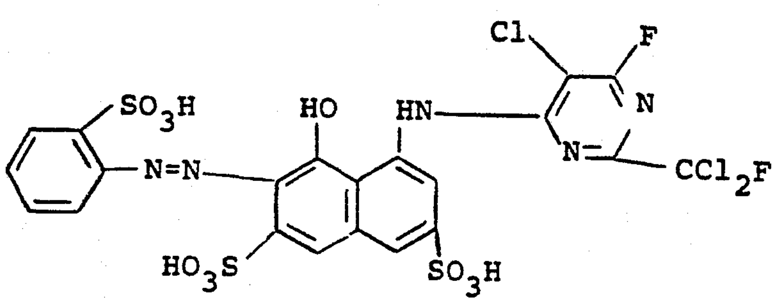

das sich in Wasser mit roter Farbe löst und Baumwolle in brillanten roten Tönen färbt.

Ersetzt man in diesem Beispiel die Diazoniumverbindung aus Anilin-2-sulfonsäure durch die äquimolaren Mengen der aus folgenden Aminen erhältlichen Diazoniumverbindungen, so werden ebenfalls brillante rote Reaktivfarbstoffe erhalten:

| Beispiel | Diazoverbindung | Farbton |
|---|---|---|
| 42 | Anilin | Rot |
| 43 | Anilin-2,5-disulfonsäure | Rot |
| 44 | 4-Methylanilin-2-sulfonsäure | Rot |
| 45 | 4-Methoxyanilin-2-sulfonsäure | blaust. Rot |
| 46 | 4-Methoxyanilin-2,5-disulfonsäure | blaust. Rot |
| 47 | 1-Amino-5(2'-(2"-sulfophenylamino) 4'-fluortriazin-1',3',5'-yl-6'-)-aminobenzol-2-sulfonsäure | Rot |
| 48 | 1-Amino-5-(5'-chlor-2',6'-difluor-pyrimidyl-4')-aminobenzol-2-sulfon-säure | Rot |
| 49 | 2-Aminonaphthalin-1-sulfonsäure | blaust. Rot |
| 50 | 2-Aminonaphthalin-1,5-disulfon-säure | " |
| 51 | 2-Aminonaphthalin-1,5,7-trisulfon-säure | " |
| 52 | Anilin-4-sulfonsäure | Rot |
| 53 | Anilin-3-sulfonsäure | " |
| 54 | 4-Chloranilin-2-sulfonsäure | " |
| 55 | 2,4-Dichloranilin-6-sulfonsäure | " |
| 56 | 2-Chloranilin-3-sulfonsäure | " |
| 57 | 4-Chloranilin-3-sulfonsäure | " |
| 58 | 2,3,6-Trichloranilin-5-sulfonsäure | " |
| 59 | 2-Chloranilin-4-sulfonsäure | " |
| 60 | 2,5-Dichloranilin | " |
| 61 | 2-Methylanilin-3-sulfonsäure | " |
| 62 | 2-Methylanilin-4-sulfonsäure | " |
| 63 | 2-Chlor-6-methylanilin-4-sulfonsäure | " |
| 64 | 3-Methylanilin-4-sulfonsäure | " |

| Beispiel | Diazokomponente | Farbton |
|---|---|---|
| 65 | 4-Methylanilin-3-sulfonsäure | Rot |
| 66 | 5-Methyl-4-chloranilin-2-sulfonsäure | " |
| 67 | 4-Acetylaminoanilin-2-sulfonsäure | " |
| 68 | 2,3-Dichloranilin-6-sulfonsäure | " |
| 69 | 2,4-Dimethylanilin-6-sulfonsäure | " |
| 70 | 2,4-Dimethylanilin-5-sulfonsäure | " |
| 71 | 2-Methyl-4-chloranilin-6-sulfonsäure | " |

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in roten bis blaustichig roten Tönen färben.

Beispiel 72

Kondensiert man unter den in Beispiel 39 angegebenen Bedingungen je 0,1 Mol 2-Fluordichlormethyl-4,6-difluor-5-chlorpyrimidin und 1-Amino-8-hydroxynaphthalin-4,6-disulfonsäure und kuppelt das Kondensationsprodukt nach analogen Methoden mit der Diazoniumverbindung aus Anilin-2-sulfonsäure, so erhält man nach Aussalzen, Isolieren und Trocknen den Farbstoff der Formel

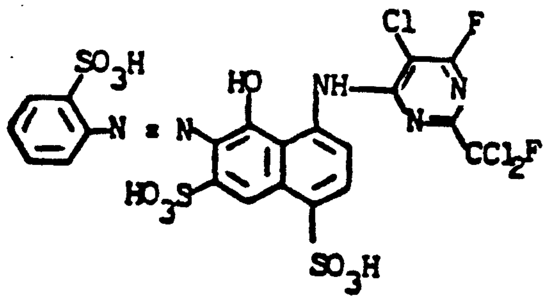

als dunkles Pulver, das sich in Wasser mit gelbstichig roter Farbe löst und zum Bedrucken und Färben von Baumwolle in brillanten roten Farbtönen hervorragend geeignet ist.

Ersetzt man in diesem Beispiel die Diazoniumverbindung aus Anilin-2-sulfonsäure auch äquimolare Mengen der Diazoniumverbindung der in den Beispielen 42-62 aufgeführten Amine, so erhält man ebenfalls brillante rote Reaktivfarbstoffe.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in brillant roten Tönen färben.

Beispiel 73

Zu einer Suspension von 0,1 Mol des nach üblichen Methoden hergestellten Aminoazofarbstoffs der Formel

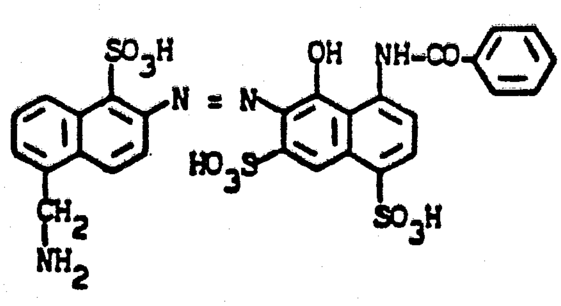

in 1000 Teilen Wasser werden bei pH 7 und ca. 20-30°C 25 Teile 2-Fluordichlormethyl-4,6-difluor-5-chlorpyrimidin zugetropft und dabei der pH-Wert durch Zugabe von verdünnter Natronlauge oder einer Natriumcarbonatlösung im Bereich von 6-8 gehalten.

Nach beendeter Kondensation wird ausgesalzen, isoliert und getrocknet. Der als rotes Pulver anfallende Farbstoff der Formel

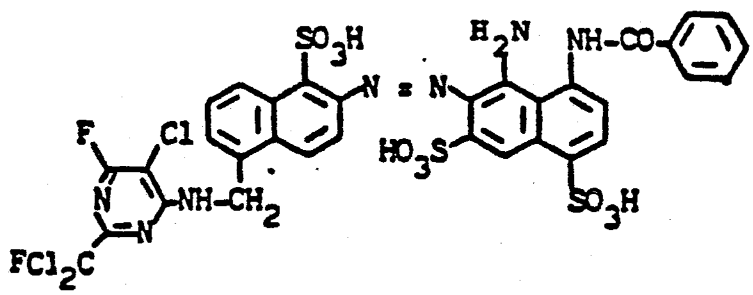

färbt Wolle und Baumwolle in brillant roten Tönen. Durch vorheriges emulgieren des Chlor-fluorpyrimidins in Wasser kann die Kondensationsgeschwindigkeit erhöht werden.

Weitere rote Farbstoffe mit ähnlichen Eigenschaften erhält man, wenn man aus den in der folgenden Tabelle aufgeführten Kupplungs- und Diazokomponenten nach üblichen Verfahren Aminoazofarbstoffe herstellt und diese nach dem im obigen Beispiel beschriebenen Verfahren mit 2-Fluordichlormethyl-4,6-difluor-5-chlorpyrimidin kondensiert.

| Beispiel | Diazokomponente | Kupplungskomponente | Farbton |
|---|---|---|---|
| 74 | 2-Amino-5-aminomethylennaphthalin-1-sulfonsäure | 1-Benzoylamino-8-hydroxynaphthalin-3,6-disulfonsäure | Rot |
| 75 | " | 1-Acetylamino-8-hydroxynaphthalin-3,6-disulfonsäure | " |
| 76 | " | 1-Acetylamino-8-hydroxynaphthalin-4,6-disulfonsäure | " |
| 77 | " | 1-(2'-(2"-sulfophenylamino)-4'-fluortriazin-1',3',5'-yl-6')-8-hydroxynaphthalin-3,6-disulfonsäure | " |
| 78 | 3-Amino-N-methylbenzylamin-4-sulfonsäure | 1-Acetylamino-8-hydroxynaphthalin-3,6-disulfonsäure | " |
| 79 | " | 1-Acetylamino-8-hydroxynaphthalin-4,6-disulfonsäure | " |
| 80 | " | 1-Benzoylamino-8-hydroxynaphthalin-3,6-disulfonsäure | " |
| 81 | " | 1-Benzoylamino-8-hydroxynaphthalin-4,6-disulfonsäure | " |
| 82 | " | 1-(2',3'-Dichlorchinoxalin-6'-carbonylamino)-8-hydroxynaphthalin-4,6-disulfonsäure | " |

| Beispiel | Diazokomponente | Kupplungskomponente | Farbton |
|---|---|---|---|
| 83 | 2-Amino-5-aminomethylennaphthalin-1,7-disulfonsäure | 1-(2',3'-Dichlorchinoxalin-6'-carbonylamino)-8-hydroxynaphthalin-4,6-disulfonsäure | Rot |
| 84 | " | 1-Acetylamino-8-hydroxynaphthalin-3,6-disulfonsäure | " |
| 85 | " | 1-Acetylamino-8-hydroxynaphthalin-4,6-disulfonsäure | " |
| 86 | " | 1-Benzoylamino-8-hydroxynaphthalin-3,6-disulfonsäure | " |
| 87 | " | 1-/2'-(2"-Sulfophenylamino)-4'-fluortriazin-1',3',5'-yl-6')-8-hydroxynaphthalin-3,6-disulfonsäure | " |
| 88 | " | 1-Benzoylamino-8-hydroxynaphthalin-4,6-disulfon säure | " |
| 89 | 2-Amino-5-aminomethylennaphthalin-7-sulfonsäure | 1-Benzoylamino-8-hydroxynaphthalin-4,6-disulfonsäure | " |
| 89a | " | 1-Benzoylamino-8-hydroxynaphthalin-3,6-disulfonsäure | " |

Verwendet man in den Beispielen 73-89 anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in brillanten roten Tönen färben.

0139248

Beispiel 90

19 Teile 1,3-Diaminobenzol-4-sulfonsäure werden wie in Beispiel 4 beschrieben mit 23,5 Teilen 2-Difluorchlormethyl-4,6-difluor-5-chlorpyrimidin zur Reaktion gebracht, diazotiert und nach üblichen Methoden mit 44,5 Teilen 1-Benzoylamino-8-hydroxynaphthalin-4,6-disulfonsäure gekuppelt. Nach beendeter Kupplung wird ausgesalzen, isoliert und getrocknet. Der als rotes Pulver anfallende Farbstoff der Formel

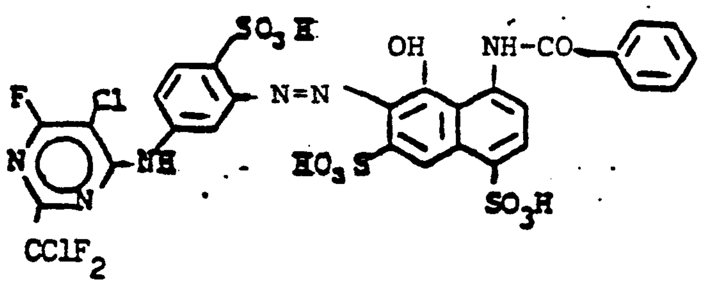

färbt Wolle und Baumwolle in brillanten roten Tönen.

Weitere orange bis rote Farbstoffe erhält man, wenn man nach obiger Methode die in der folgenden Tabelle Spalte 2 genannten Diazokomponenten mit 2-Trifluormethyl-4,5,6-trifluorpyrimidin, 2-Fluordichlormethyl-4,6-difluorpyrimidin oder 2-Fluordichlormethyl-4,6-difluor-5-chlorpyrimidin umsetzt und danach mit der in Spalte 3 genannten Kupplungskomponenten kuppelt.

| Beispiel | Diazokomponente | Kupplungskomponente | Farbton |
|---|---|---|---|
| 91 | 1,3-Diaminobenzol-4-sulfonsäure | 1-Acetylamino-8-hydroxynaphthalin-3,6-disulfonsäure | Rot |
| 92 | " | 1-Acetylamino-8-hydroxynaphthalin-4,6-disulfonsäure | " |
| 93 | " | 1-Benzoylamino-8-hydroxynaphthalin-3,6-disulfonsäure | " |
| 94 | " | 1-(2'-(2"-Sulfophenylamino)-4'-fluortriazin-1',3',5'-yl-6')-8-hydroxynaphthalin-3,6-disulfonsäure | " |
| 95 | " | 1-(2',3'-Dichlorchinoxalin-6'-carbonylamino)-8-hydroxynaphthalin-4,6-disulfonsäure | " |
| 96 | " | 1-Hydroxy-naphthalin-4-sulfonsäure | " |
| 97 | " | 1-Hydroxy-naphthalin-5-sulfonsäure | " |
| 98 | " | 1-Hydroxy-naphthalin-4,6-disulfonsäure | " |
| 99 | " | 1-Hydroxy-naphthalin-4,7-disulfonsäure | " |
| 100 | " | 1-Hydroxy-naphthalin-3,6-disulfonsäure | " |
| 101 | " | 2-Acetylamino-5-hydroxynaphthalin-1,7-disulfonsäure | Orange |
| 102 | " | 1-(5'-Chlor-6'-dichlormethyl-2'-fluor-4'-aminopyrimidyl)-8-hydroxynaphthalin-3,6-disulfonsäure | Rot |
| 103 | " | 2-Acetylamino-8-hydroxynaphthalin-6-sulfonsäure | Scharlach |
| 104 | " | 2-Acetylamino-8-hydroxynaphthalin-3,6-disulfonsäure | " |
| 105 | " | 2-Acetylamino-5-hydroxynaphthalin-7-sulfonsäure | Orange |

| Beispiel | Diazokomponente | Kupplungskomponente | Farbton |
|---|---|---|---|
| 106 | 1,3-Diaminobenzol-4-sulfonsäure | 2-Hydroxy-naphthalin-6,8-disulfonsäure | " |
| 107 | " | 2-Benzoylamino-5-hydroxy-naphthalin-u-sulfonsäure | " |
| 108 | 1,4-Diaminobenzol-2-sulfonsäure | 2-Benzoylamino-5-hydroxy-naphthalin-7-sulfonsäure | Scharlach |
| 109 | " | 1-Acetylamino-8-hydroxynaphthalin-3,6-disulfonsäure | Rot |
| 110 | " | 1-Acetylamino-8-hydroxynaphthalin-4,6-disulfonsäure | " |
| 111 | " | 1-Benzoylamino-8-hydroxynaphthalin-3,6-disulfonsäure | " |
| 112 | " | 1-(2'-(2"-Sulfophenylamino)-4'-fluortriazin-1',3',5'-yl-6')-8-hydroxynaphthalin-3,6-disulfonsäure | " |
| 113 | " | 1-Benzoylamino-8-hydroxynaphthalin-4,6-disulfonsäure | " |
| 114 | " | 2-Acetylamino-8-hydroxynaphthalin-6-sulfonsäure | " |
| 115 | " | 2-Acetylamino-8-hydroxynaphthalin-3,6-disulfonsäure | " |
| 116 | " | 2-Acetylamino-5-hydroxynaphthalin-7-sulfonsäure | " |
| 117 | " | 1-Hydroxy-naphthalin-4-sulfonsäure | " |
| 118 | " | 1-Hydroxy-naphthalin-5-sulfonsäure | " |
| 119 | " | 1-Hydroxy-naphthalin-4,6-disulfonsäure | " |
| 120 | " | 1-Hydroxy-naphthalin-4,7-disulfonsäure | " |
| 121 | " | 1-Hydroxy-naphthalin-3,6-disulfonsäure | " |

| Beispiel | Diazokomponente | Kupplungskomponente | Farbton |
|---|---|---|---|
| 122 | 1,4-Diaminobenzol-2-sulfonsäure | 2-Acetylamino-5-hydroxynaphthalin-1,7-disulfonsäure | Scharlach |
| 123 | " | 2-Hydroxy-naphthalin-6,8-disulfonsäure | Orange |
| 124 | 1,3-Diamino-2-methylbenzol-5-sulfonsäure | " | " |
| 125 | " | 1-Acetylamino-8-hydroxynaphthalin-3,6-disulfonsäure | Rot |
| 126 | " | 1-Acetylamino-8-hydroxynaphthalin-4,6-disulfonsäure | " |
| 127 | " | 1-Benzoylamino-8-hydroxynaphthalin-3,6-disulfonsäure | " |
| 128 | " | 1-Benzoylamino-8-hydroxynaphthalin-4,6-disulfonsäure | " |
| 129 | " | 1-(2',3'-Dichlorchinoxalin-6'-carbonylamino)-8-hydroxynaphthalin-4,6-disulfonsäure | Rot |
| 130 | " | 2-Acetylamino-8-hydroxynaphthalin-6-sulfonsäure | Scharlach |
| 131 | " | 2-Acetylamino-8-hydroxynaphthalin-3,6-disulfonsäure | " |
| 132 | " | 2-Acetylamino-5-hydroxynaphthalin-7-sulfonsäure | Orange |
| 133 | " | 1-Hydroxy-naphthalin-4-sulfonsäure | Rot |
| 134 | " | 1-Hydroxy-naphthalin-5-sulfonsäure | " |
| 135 | " | 1-Hydroxy-naphthalin-4,6-disulfonsäure | " |
| 136 | " | 1-Hydroxy-naphthalin-4,7-disulfonsäure | " |
| 137 | " | 1-Hydroxy-naphthalin-3,6-disulfonsäure | " |

| Beispiel | Diazokomponente | Kupplungskomponente | Farbton |
|---|---|---|---|
| 138 | 1,3-Diamino-2-methylbenzol-5-sulfonsäure | 2-Acetylamino-5-hydroxynaphthalin-1,7-disulfonsäure | Orange |
| 139 | " | 2-Benzoylamino-5-hydroxynaphthalin-7-sulfonsäure | " |
| 140 | 1,5-Diaminobenzol-2,4-disulfonsäure | 2-Benzoylamino-5-hydroxynaphthalin-7-sulfonsäure | Orange |
| 141 | " | 1-Acetylamino-8-hydroxynaphthalin-3,6-disulfonsäure | Rot |
| 142 | " | 1-Acetylamino-8-hydroxynaphthalin-4,6-disulfonsäure | " |
| 143 | " | 1-Benzoylamino-8-hydroxynaphthalin-3,6-disulfonsäure | " |
| 144 | " | 1-(2'-(2"-Sulfophenylamino-4'-fluortriazin-1',3',5'-yl-6')-8-hydroxynaphthalin-3,6-disulfon | " |
| 145 | " | 1-Benzoylamino-8-hydroxynaphthalin-4,6-disulfonsäure | Rot |
| 146 | " | 2-Acetylamino-8-hydroxynaphthalin-6-sulfonsäure | " |
| 147 | " | 2-Acetylamino-8-hydroxynaphthalin-3,6-disulfonsäure | " |
| 148 | " | 2-Acetylamino-8-hydroxynaphthalin-7-sulfonsäure | Orange |
| 149 | " | 1-Hydroxy-naphthalin-4-sulfonsäure | Rot |
| 150 | " | 1-Hydroxy-naphthalin-2-sulfonsäure | Rot |
| 151 | " | 1-Hydroxy-naphthalin-4,6-disulfonsäure | " |
| 152 | " | 1-Hydroxy-naphthalin-4,7-disulfonsäure | " |

| Beispiel | Diazokomponente | Kupplungskomponente | Farbton |
|---|---|---|---|
| 153 | 1,5-Diaminobenzol-2,4-disulfonsäure | 1-Hydroxy-naphthalin-3,6-disulfonsäure | Rot |
| 154 | " | 2-Acetylamino-5-hydroxynaphthalin-1,7-disulfonsäure | Orange |
| 155 | " | 2-Hydroxynaphthalin-6,8-disulfonsäure | " |

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in roten bis orangen Tönen färben.

Beispiel 156

44 Teile 1-(4'-Aminobenzoylamino)-8-hydroxynaphthalin-3,6-disulfonsäure werden in 1000 Teilen Wasser gelöst und unter starkem Rühren bei 40-60°C mit 25 Teilen 2-Fluordichlormethyl-4,6-difluor-5-chlorpyrimidin versetzt. Dabei wird die freiwerdende Flußsäure auf pH 5-5,5 mit Sodalösung abgestumpft.

Das so erhaltene Kondensationsprodukt wird dann mit der nach üblichen Methoden zu erhaltenen Diazoniumverbindungen aus 0,1 Mol Anilin-2-sulfonsäure vereinigt und die Kupplung bei pH 7 zu Ende geführt. Nach Aussalzen, Isolieren und Trocknen erhält man ein dunkles Pulver des Farbstoffs der Formel

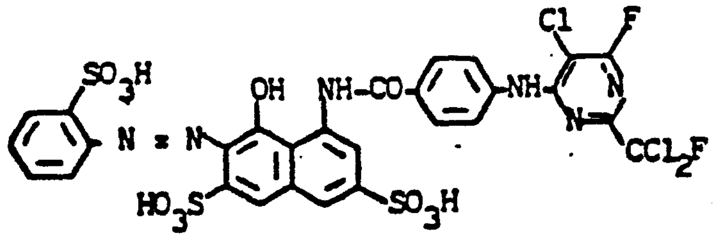

Weitere Farbstoffe mit roten Farbtönen erhält man, wenn in diesem Beispiel die Anilin-2-sulfonsäure durch folgende aromatische Amine ersetzt wird:

Anilin
Anilin-3-sulfonsäure
1-Amino-5-chlorbenzol-2-sulfonsäure
1-Amino-2-carboxybenzol-4-sulfonsäure
1-Amino-4-methylbenzol-2-sulfonsäure
Anilin-2,5-disulfonsäure
2-Aminonaphthalin-1-sulfonsäure
2-Aminonaphthalin-1,5-disulfonsäure
2-Aminonaphthalin-1,7-disulfonsäure

Verwendet man anstelle von 2-Fluordichlormethyl-4,6-difluor-5-chlorpyrimidin die entsprechenden Mengen 2-Difluormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in roten bis violetten Tönen färben.

Beispiel 157

In eine Suspension von 0,1 Mol des Diazoniumsalzes von 1-Amino-5-(2'-fluordichlormethyl-5'-chlor-6'-fluor-pyrimidyl-4')-aminobenzol-2-sulfonsäure (hergestellt nach Beispiel 4) wird eine mit Natriumacetat gepufferte Lösung von 24 g 2-Amino-8-hydroxy-naphthalin-6-sulfonsäure in 80 ml Wasser bei pH 2-4 gegeben. Es erfolgt Kupplung zu dem Farbstoff der Formel

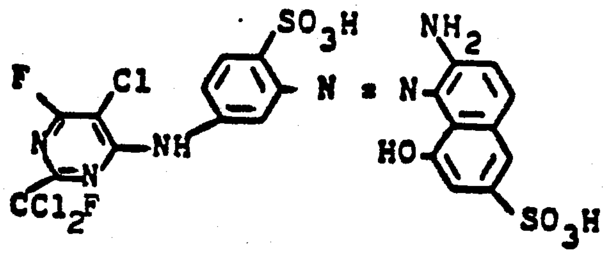

Nach beendeter Kupplung wird der Farbstoff ausgesalzen, isoliert und bei 30-40°C im Vakuum getrocknet. Er löst sich in Wasser und färbt Wolle in roten Tönen mit guten Naß- und Lichtechtheiten.

Weitere orange bis blaustichig rote Farbstoffe erhält man, wenn man die in der folgenden Tabelle Spalte 2 genannten Diazokomponenten mit 2-Fluordichlormethyl-4,6-difluor-5-chlorpyrimidin nach der in Beispiel 2 beschriebenen Methode umsetzt, diazotiert und danach mit den in Spalte 3 genannten Kupplungskomponenten nach bekannten Methoden kuppelt.

| Beispiel | Diazokomponente | Kupplungskomponete | Farbton |
|---|---|---|---|
| 158 | 1,3-Diaminobenzol-4-sulfonsäure | 2-N-Methylamino-8-hydroxynaphthalin-6-sulfonsäure | blaust. rot |
| 159 | " | 2-Amino-8-hydroxynaphthalin--5-sulfonsäure | rot |
| 160 | " | 2-Amino-8-hydroxynaphthalin-3,6-disulfonsäure | blaust. rot |
| 161 | " | 2-Aminonaphthalin-5-sulfonsäure | Orange |
| 162 | " | 2-Aminonaphthalin-6-sulfonsäure | " |
| 163 | " | 2-Aminonaphthalin-7-sulfonsäure | " |
| 164 | " | 7-Aminonaphthalin-1-sulfonsäure | " |
| 165 | " | 2-Aminonaphthalin-3,6-disulfonsäure | " |
| 166 | " | 2-Aminonaphthalin-3,7-disulfonsäure | " |
| 167 | " | 6-Aminonaphthalin-1,3-disulfonsäure | " |
| 168 | " | 2-N-Methylaminonaphthalin-7-sulfonsäure | rotst. Orange |
| 169 | " | 2-Amino-8-hydroxynaphthalin-5,7-disulfonsäure | blaust. Rot |
| 170 | 1,4-Diaminobenzol-2-sulfonsäure | 1-Amino-8-hydroxynaphthalin-6-sulfonsäure | blaust. Rot |
| 171 | " | 2-N-Methylmaino-8-hydroxynaphthalin-6-sulfonsäure | " |
| 172 | " | 2-Amino-8-hydroxynaphthalin-5-sulfonsäure | " |
| 173 | " | 2-Amino-8-hydroxynaphthalin-3,6-disulfonsäure | " |
| 174 | " | 2-Aminonaphthalin-5-sulfonsäure | rotst. Orange |

| Beispiel | Diazokomponente | Kupplungskomponente | Farbton |
|---|---|---|---|
| 175 | 1,4-Diaminobenzol-2-sulfonsäure | 2-Aminonaphthalin-6-sulfonsäure | Orange |
| 176 | " | 2-Aminonaphthalin-7-sulfonsäure | " |
| 177 | " | 7-Aminonaphthalin-1-sulfonsäure | " |
| 178 | " | 2-Aminonaphthalin-3,6-disulfonsäure | " |
| 179 | " | 2-Aminonaphthalin-3,7-disulfonsäure | " |
| 180 | " | 6-Aminonaphthalin-1,3-disulfonsäure | " |
| 181 | " | 2-N-Methylaminonaphthalin-7-sulfonsäure | rot |
| 182 | " | 2-Amino-8-hydroxynaphthalin-5,7-disulfonsäure | blaust. Rot |
| 183 | 2,5-Diamino-4-methyl-3'-sulfo-1,1'-diphenylsulfon | 2-Amino-8-hydroxynaphthalin-6-sulfonsäure | blaust. Rot |
| 184 | " | 2-N-Methylamino-8-hydroxynaphthalin-6-sulfonsäure | " |
| 185 | " | 2-Amino-8-hydroxynaphthalin-5-sulfonsäure | " |
| 186 | " | 2-Amino-8-hydroxynaphthalin-3,6-disulfonsäure | " |
| 187 | " | 2-Aminonaphthalin-5-sulfonsäure | gelbst. Rot |
| 188 | " | 2-Aminonaphthalin-6-sulfonsäure | " |
| 189 | " | 2-Aminonaphthalin-7-sulfonsäure | " |
| 190 | " | 7-Aminonaphthalin-1-sulfonsäure | " |
| 191 | " | 2-Aminonaphthalin-3,6-disulfonsäure | " |

0139248

| Beispiel | Diazokomponente | Kupplungskomponente | Farbton |
|---|---|---|---|
| 192 | 2,5-Diamino-4-methyl-3'-sulfo-1,1'-diphenylsulfon | 2-Aminonaphthalin-3,7-disulfonsäure | gelbst. Rot |
| 193 | " | 6-Aminonaphthalin-1,3-disulfonsäure | " |
| 194 | " | 2-N-Methylaminonaphthalin-7-sulfonsäure | Rot |
| 195 | " | 2-Amino-8-hydroxynaphtalin-5,7-disulfonsäure | blaust. Rot |

Beispiel 196

Zu einer Suspension von 0,1 Mol des nach üblichen Methoden hergestellten Aminoazofarbstoffs der Formel

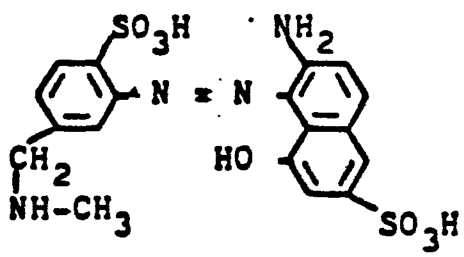

in 100 ml Wasser werden bei pH 7 und ca. 40°C 25 Teile 2-Fluordichlormethyl-4,6-difluor-5-chlorpyrimidin zugetropft und dabei der pH-Wert durch Zugabe von verdünnter Natronlauge oder einer Natriumcarbonat-Lösung im Bereich von 6-8 gehalten. Nach beendeter Kondensation wird ausgesalzen, isoliert und getrocknet. Der als rotes Pulver anfallende Farbstoff der Formel

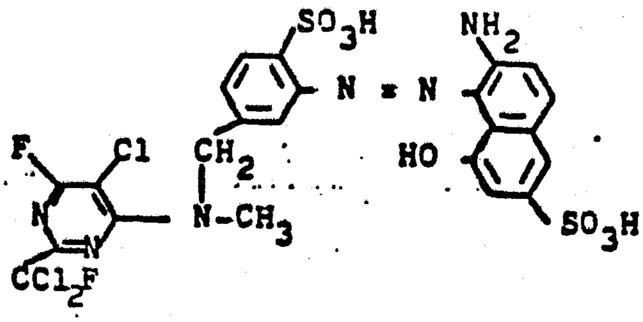

färbt Wolle und Baumwolle in roten echten Tönen.

Weitere orange bis rote Farbstoffe mit ähnlichen Eigenschaften erhält man, wenn man aus den in der folgenden Tabelle aufgeführten Kupplungs- und Diazokomponenten nach üblichen Verfahren Aminoazofarbstoffe herstellt und diese nach dem im obigen Beispiel beschriebenen Verfahren mit 2-Fluordichlormethyl-4,6-difluor-5-chlorpyrimidin kondensiert.

| Beispiel | Diazokomponente | Kupplungskomponente | Farbton |
|---|---|---|---|
| 197 | 3-Amino-N-methylbenzylamin-4-sulfonsäure | 2-N-Methylamino-8-hydroxynaphthalin-6-sulfonsäure | blaust. Rot |
| 198 | " | 2-Amino-8-hydroxynaphthalin-5-sulfonsure | Rot |
| 199 | " | 2-Amino-8-hydroxynaphthalin-3,6-disulfonsäure | blaust. Rot |
| 200 | " | 2-Aminonaphthalin-5-sulfinsäure | Orange |
| 201 | " | 2-Aminonaphthalin-6-sulfonsäure | " |
| 202 | " | 2-Aminonaphthalin-7-sulfonsäure | " |
| 203 | " | 7-Aminonaphthalin-1-sulfonsäure | " |

| Beispiel | Diazokomponente | Kupplungskomponente | Farbton |
|---|---|---|---|
| 204 | 3-Amino-N-methyl-benzylamin-4-sulfonsäure | 2-Aminonaphthalin-3,6-disulfonsäure | Orange |
| 205 | " | 2-Aminonaphthalin-3,7-disulfonsäure | " |
| 206 | " | 6-Aminonaphthalin-1,3-disulfonsäure | " |
| 207 | " | 2-N-Methylaminonaphthalin-7-sulfonsäure | rotst. Orange |
| 208 | " | 2-Amino-8-hydroxynaphthalin-5,7-disulfonsäure | blaust. Rot |
| 209 | " | 2-N-Methylamino-8-hydroxynaphthalin-6-sulfonsäure | blaust. Rot |
| 210 | " | 2-Amino-8-hydroxynaphthalin-5-sulfonsäure | Rot |
| 211 | " | 2-Amino-8-hydroxynaphthalin-3,6-disulfonsäure | blaust. Rot |
| 212 | " | 2-Aminonaphthalin-5-sulfonsäure | Orange |
| 213 | 2-Amino-5-aminomethylennaphthalin-1-sulfonsäure | 2-Aminonaphthalin-6-sulfonsäure | Orange |
| 214 | " | 2-Aminonaphthalin-7-sulfonsäure | " |
| 215 | " | 7-Aminonaphthalin-1-sulfonsäure | " |
| 216 | " | 2-Aminonapthalin-3,6-disulfonsäure | " |
| 217 | " | 2-Aminonaphthalin-3,7-disulfonsäure | " |
| 218 | " | 6-Aminonaphthalin-1,3-disulfonsäure | " |
| 219 | " | 2-Amino-8-hydroxynaphthalin-6-sulfonsäure | Rot |

0139248

| Beispiel | Diazokomponente | Kupplungskomponente | Farbton |
|---|---|---|---|
| 220 | 2-Amino-5-amino-methylennaphthalin-1,7-disulfonsäure | 2-Amino-8-hydroxynaphthalin-6-sulfonsäure | Rot |
| 221 | " | 2-N-Methylamino-8-hydroxynaphthalin-6-sulfonsäure | blaust. Rot |
| 222 | " | 2-Amino-8-hydroxynaphthalin-3,6-disulfonsäure | Rot |
| 223 | " | 2-Aminonaphthalin-5-sulfonsäure | Orange |
| 224 | " | 2-Aminonaphthalin-6-sulfonsäure | " |
| 225 | " | 2-Aminonaphthalin-7-sulfonsäure | " |
| 226 | " | 7-Aminonaphthalin-1-sulfonsäure | " |
| 227 | " | 2-Aminonaphthalin-3,6-disulfonsäure | " |
| 228 | " | 2-Aminonaphthalin-3,7-disulfonsäure | Orange |
| 229 | " | 6-Aminonaphthalin-1,3-disulfonsäure | " |
| 230 | 2-Amino-5-aminomethylennaphthalin-7-sulfonsäure | 2-Amino-8-hydroxynaphthalin-6-sulfonsäure | Rot |
| 231 | " | 2-N-Methylamino-8-hydroxynaphthalin-6-sulfonsäure | blaust. Rot |
| 232 | " | 2-Amino-8-hydroxynaphthalin-3,6-disulfonsäure | " |
| 233 | " | 2-Aminonaphthalin-5-sulfonsäure | Orange |
| 234 | " | 2-Aminonaphthalin-6-sulfonsäure | " |
| 235 | " | 2-Aminonaphthalin-7-sulfonsäure | " |

| Beispiel | Diazokomponente | Kupplungskomponente | Farbton |
|---|---|---|---|
| 236 | 2-Amino-5-aminomethylnaphthalin-7-sulfonsäure | 7-Aminonaphthalin-1-sulfonsäure | Orange |
| 237 | " | 2-Aminonaphthalin-3,6-disulfonsäure | " |
| 238 | " | 2-Aminonaphthalin-3,7-disulfonsäure | " |
| 239 | " | 6-Aminonaphthalin-1,3-disulfonsäure | " |

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluor-pyrimidin oder 2-Fluordichlormethyl-4,6-difluorpyrimidin und verfährt analog wie oben beschrieben, so erhält man Farbstoffe, die Wolle und Baumwolle in orange bis roten Tönen färben.

Beispiel 240

Zu einer Suspension von 0,1 Mol des nach üblichen Methoden hergestellten Aminoazofarbstoffs der Formel

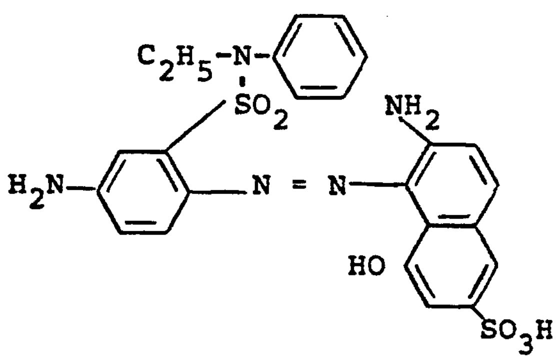

in 1200 ml Wasser werden bei pH 6 und ca. 50°C 25 Teile 2-Fluordichlormethyl-4,6-difluor-5-chlorpyrimidin zugetropft und dabei der pH-Wert durch Zugabe von verdünnter Natronlauge oder einer Natriumcarbonat-Lösung im Bereich von 6-7 gehalten. Nach beendeter Kondensation wird ausgesalzen, isoliert und getrocknet. Der als rotes Pulver anfallende Farbstoff der Formel

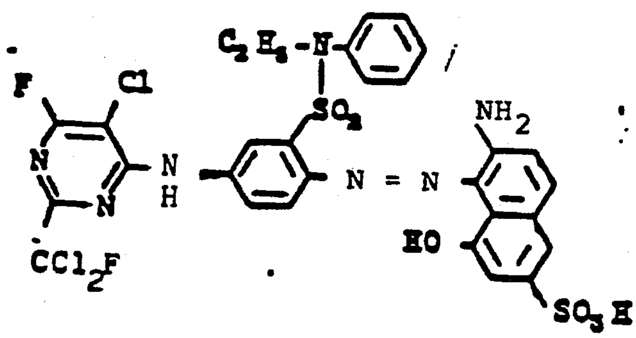

färbt Wolle und Baumwolle in roten echten Tönen.

Weitere orange bis rote Farbstoffe mit ähnlichen Eigenschaften erhält man, wenn im obigen Beispiel 2-Amino-8-hydroxynaphthalin-6-sulfonsäure durch die in den nachfolgenden Tabelle aufgeführten Kupplungskomponenten ersetzt und zwar nach an sich bekannten Methoden und die so erhaltenen Farbstoffe mit 2-Fluordichlormethyl-4,6-difluor-5-chlorpyrimidin kondensiert.

| Beispiel | Kupplungskomponente | Farbton |
|---|---|---|
| 241 | 2-N-Methylamino-8-hydroxynaphthalin-6-sulfonsäure | blaust. Rot |
| 242 | 2-Amino-8-hydroxynaphthalin-5-sulfonsäure | " |
| 243 | 2-Amino-8-hydroxynaphthalin-3,6-disulfonsäure | " |

| Beispiel | Kupplungskomponente | Farbton |
|---|---|---|
| 244 | 2-Aminonaphthalin-5-sulfonsäure | gelbst. Rot |
| 245 | 2-Aminonaphthalin-6-sulfonsäure | " |
| 246 | 2-Aminonaphthalin-7-sulfonsäure | " |
| 247 | 2-Aminonaphthalin-1-sulfonsäure | " |
| 248 | 2-Aminonaphthalin-3,6-disulfonsäure | " |
| 249 | 2-Aminonaphthalin-3,7-disulfonsäure | " |
| 250 | 6-Aminonaphthalin-1,3-disulfonsäure | " |
| 251 | 5-Aminonaphthalin-1,3-disulfonsäure | " |
| 252 | 2-N-Methylaminonaphthalin-7-sulfonsäure | Rot |
| 253 | 2-Amino-8-hydroxynaphthalin-5,7-disulfonsäure | blaust. Rot |

Verwendet man anstelle von 2-Fluordichlormethyl-4,6-difluor-5-chlor-pyrimidin die entsprechenden Mengen 2-Difluormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in orange bis blaustichig roten Tönen färben.

Beispiel 254

Zu einer Suspension von 0,1 Mol des nach üblichen Methoden hergestellten Aminoazofarbstoffs der Formel

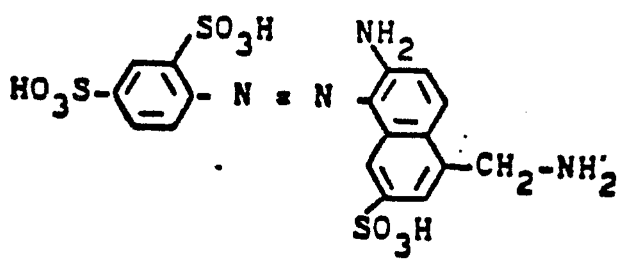

in 1000 ml Wasser werden bei pH 7 und ca. 40° 25 Teile 2-Fluorchlormethyl-4,6-difluor-5-chlorpyrimidin zugetropft und dabei der pH-Wert durch Zugabe von verdünnter Natronlauge oder einer Natriumcarbonat-Lösung im Bereich von 6-8 gehalten. Nach beendeter Kondensation wird ausgesalzen, isoliert und getrocknet. Der als rotes Pulver anfallende Farbstoff der Formel

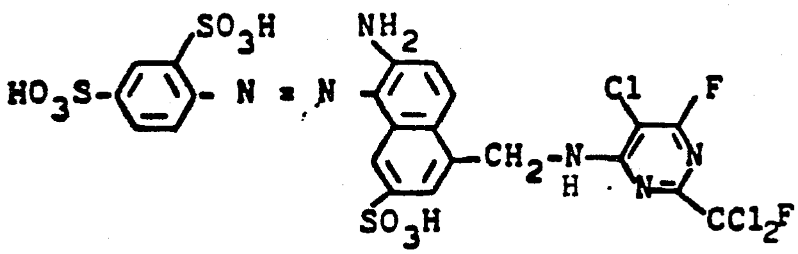

färbt Wolle und Baumwolle in echten roten Tönen.

Weitere orange bis rote Farbstoffe mit ähnlichen Eigenschaften erhält man, wenn man aus den in der folgenden Tabelle aufgeführten Kupplungs- und Diazokomponenten nach üblichen Verfahren Aminoazofarbstoffe herstellt und diese nach dem im obigen Beispiel beschriebenen Verfahren mit 2-Difluorchlormethyl-4,6-difluor-5-chlorpyrimidin kondensiert.

| Beispiel | Diazokomponente | Kupplungskomponente | Farbton |
|---|---|---|---|
| 255 | 1-Aminobenzol-2,5-disulfonsäure | 2-Amino-5-aminomethylen-naphthalin-1,7-disulfonsäure | gelbst. Rot |
| 256 | 1-Amino-2,5-dichlorbenzol-4-sulfonsäure | " | Orange |
| 257 | 1-Amino-5-benzoylamino-benzol-2-sulfonsäure | " | " |

| Beispiel | Diazokomponente | Kupplungskomponente | Farbton |
|---|---|---|---|
| 258 | 1-Amino-4-benzoylamino-benzol-2-sulfonsäure | 2-Amino-5-aminomethylen-naphthalin-1,7-disulfonsäure | Orange |
| 259 | 1-Amino-4-acetylamino-benzol-2,5-disulfonsäure | " | Scharlach |
| 260 | 1-Amino-5-acetylamino-benzol-2,4-disulfonsäure | " | Rot |
| 261 | 1-Aminobenzol-2-sulfonsäure | " | Orange |
| 262 | 1-Aminobenzol-2,4-disulfonsäure | 2-Amino-5-aminomethylen-naphthalin-1-sulfonsäure | Rot |
| 263 | 1-Aminobenzol-2,5-disulfonsäure | " | gelbst. Rot |
| 264 | 1-Amino-2,5-dichlor-benzol-4-sulfonsäure | " | Orange |
| 265 | 1-Amino-5-benzoylamino-benzol-2-sulfonsäure | " | " |
| 266 | 1-Amino-4-benzoylamino-benzol-2-sulfonsäure | " | " |
| 267 | 1-Amino-4-acetylamino-benzol-2,5-disulfonsäure | 2-Amino-5-aminomethylen-naphthalin-1-sulfonsäure | Scharlach |
| 268 | 1-Amino-5-acetylamino-benzol-2,4-disulfonsäure | " | Rot |
| 269 | 1-Aminobenzol-2-sulfonsäure | " | " |

Beispiel 270

Zur Lösung von 0,1 Mol des nach üblichen Methoden hergestellten Aminoazofarbstoffs der Formel

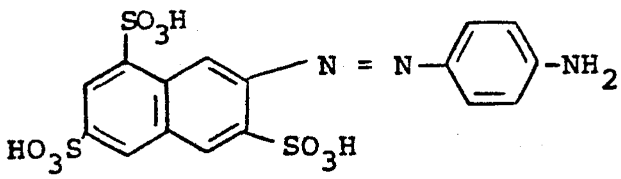

in 1000 Teilen Wasser werden bei pH 7 und ca. 50°C 25 Teile 2-Fluordichlormethyl-4,6-difluor-5-chlorpyrimidin zugetropft und dabei der pH-Wert durch Zugabe von verdünnter Natronlauge oder einer Natriumcarbonatlösung im Bereich von 6-8 gehalten.

Nach beendeter Kondensation wird ausgesalzen, isoliert und getrocknet. Der als gelbes Pulver anfallende Farbstoff der Formel

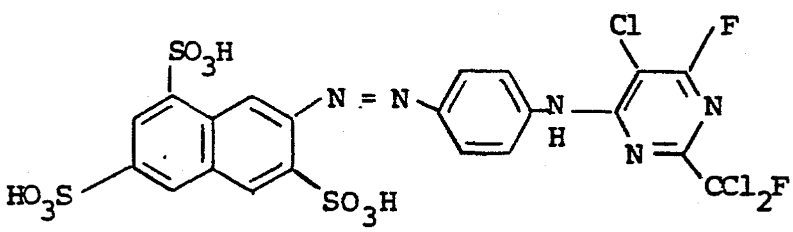

färbt Baumwolle in licht- und chlorechten gelben Farbtönen.

Wird in diesem Beispiel die 2-Aminonaphthalin-3,6,8-trisulfonsäure durch 2-Aminonaphthalin-4,8-disulfonsäure, 2-Aminonaphthalin-6,8-disulfonsäure, 2-Aminonaphthalin-4,6,8-trisulfonsäure, Aminobenzol-2,4-disulfonsäure oder Aminobenzol-2,5-disulfonsäure ersetzt, so werden ebenfalls gelbe Reaktivfarbstoffe hervorragender Licht- und Naßechtheiten erhalten.

In analoger Weise können gelbe Reaktivfarbstoffe dieses Typs erhalten werden, wenn in diesem Beispiel das als Kupplungskomponente eingesetzte Anilin durch 3-Methylanilin, 2-Methoxyanilin, 2,5-Dimethoxyanilin, 3-Acetylaminoanilin, 3-Ureidoanilin oder durch 2-Methoxy-5-methylanilin ersetzt wird.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in gelben Tönen färben.

Beispiel 271

Zur Lösung der nach üblichen Methoden aus 0,1 Mol 2-Amino-naphthalin-4,6,8-trisulfonsäure zu erhaltenden Diazoniumverbindung werden 0,1 Mol des nach Beispiel 4 zu erhaltenden Kondensationsprodukten aus 19 Teilen 1,3-Diamino-benzol-4-sulfonsäure und 25 Teilen 2-Fluordi-chlormethyl-4,6-difluor-5-chlorpyrimidin gegeben und die Kupplung durch Neutralisation mit einer verdünnten Sodalösung zu Ende geführt.

Nach Aussalzen, Filtrieren und Trocknen wird der Farbstoff der Formel

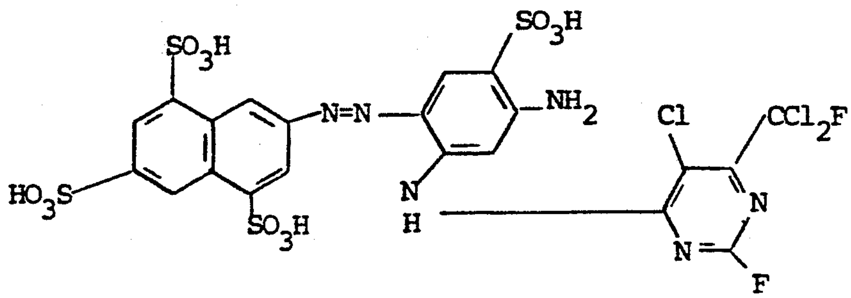

in Form eines gelben Pulvers erhalten. Er eignet sich in hervorragender Weise zum Färben und Bedrucken vom Baumwolle in goldgelben Farbtönen.

Wird in diesem Beispiel die 2-Aminonapthalin-4,6,8-trisulfonsäure durch 2-Aminonaphthalin-4,8-disulfonsäure, 2-Aminonapthalin-6,8-disulfonsäure, 2-Aminonaphthalin-3,6,8-trisulfonsäure, Aminobenzol-2,4-disulfonsäure oder Aminobenzol-2,5-disulfonsäure ersetzt, so werden ebenfalls gelbe Reaktivfarbstoffe mit hervorragenden Naßechtheiten erhalten.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-difluorpyrimidin oder 2-Fluordichlormethyl-4,6-difluorpyrimidin und verfährt analog wie oben beschrieben, so erhält man Farbstoffe, die Wolle und Baumwolle in goldgelben Tönen färben.

Beispiel 272

In die Lösung des Natriumsalzes von 32 Gew.-Teilen 1-Amino-8-hydroxynaphthalin-3,6-disulfonsäure in 200 Teilen Wasser werden bei pH 5,5-6 wie in Beispiel 82 angegeben 25 Teile 2-Fluordichlormethyl-4,6-difluor-5-chlorpyrimidin gegeben und bei 20-30°C kondensiert. Die Lösung des Kondensationsproduktes wird dann mit der Diazoniumverbindung aus 0,1 Mol 2-Aminonaphtahlin-4,6,8-trisulfonsäure in 200 Teilen Wasser vereinigt und durch Zugabe von Alkali die Kupplung bei pH 7 durchgeführt.

Nach beendeter Kupplung wird die rote Farbstofflösung mit 25 Gew.-Teilen Kupfersulfat versetzt und bei 15° und pH 6,4 eine Mischung aus 25 Teilen einer 30 %igen Wasserstoffperoxidlösung und 130 Teilen einer 20 %igen Natriumacetatlösung zugetropft. Durch Zugabe von ca. 200 g Eis wird dabei die Temperatur im Bereich von 10-15°C gehalten. Nach beendeter oxydativer Kupferung wird der Kupferkomplexfarbstoff der Formel

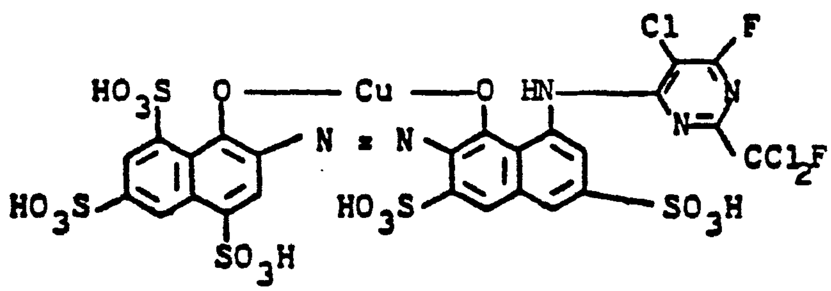

ausgesalzen, isoliert und getrocknet. Man erhält ein dunkles Pulver, das sich in Wasser mit blauer Farbe löst

und zum Bedrucken und Färben von Baumwolle in marineblauen Farbtönen mit guter Lichtechtheit geeignet ist.

Die Diazoniumverbindung aus 2-Naphtylamin-4,6,8-trisulfonsäure kann in diesem Beispiel durch die Diazoniumverbindungen aus den Aminen der folgenden Tabelle ersetzt werden. Die Ausführung der oxydativen Kupferung erfolgt analog.

| Diazoniumverbindung | Farbton |
|---|---|
| Anilin-4-sulfonsäure | Violett |
| Anilin-3,5-disulfonsäure | Violett |
| Anilin | Rotviolett |
| 2-Aminonaphthalin-4,8-disulfonsäure | Blau |
| 2-Aminonaphthalin-6,8-disulfonsäure | Blau |
| 2-Aminonaphthalin-1,5,7-trisulfonsäure | Blau |

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in violetten bis blauen Tönen färben.

Beispiel 273

In die nach dem in Beispiel 270 beschriebenen Verfahren hergestellte Lösung des Kondensationsproduktes aus 2-Amino-5-hydroxynaphthalin-7-sulfonsäure und 2-Fluordichlormethyl-4,6-difluor-5-chlorpyrimidin wird eine Suspension der

Diazoniumverbindung aus 0,1 Mol 2-Aminonaphthalin-4,6,8-trisulfonsäure in 250 Volumenteilen Wasser gegeben und die Kupplung durch Zugabe von 20 Teilen Natriumbicarbonat zu Ende geführt. Die so erhaltene Kupplungslösung wird mit 250 Teilen einer 20 %igen Natriumacetatlösung und 300 Teilen einer 3 %igen Wasserstoffperoxidlösung versetzt. Die oxidative Kupferung wird dann durch Zutropfen von 200 Teilen einer 20 %igen Kupfersulfatlösung erreicht. Nach beendeter Kupferung wird der Farbstoff der Formel

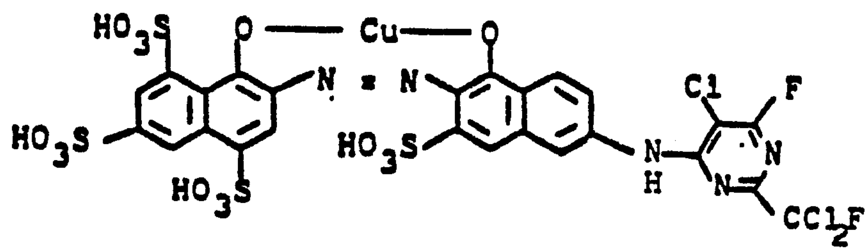

mit einem Gemisch aus 400 Teilen Natriumchlorid und 100 Teilen Kaliumchlorid ausgesalzen, anschließend isoliert und getrocknet. Man erhält ein dunkles Pulver, das sich in Wasser mit violetter Farbe löst und Baumwolle in klaren blauvioletten Farbtönen färbt.

Ersetzt man in diesem Beispiel die Diazoniumverbindung aus 2-Aminonaphthalin-4,6,8-trisulfonsäure durch Diazoniumverbindungen aus folgenden aromatischen Aminen, so erhält man ebenfalls violette Reaktivfarbstoffe:

Anilin-4-sulfonsäure,
Anilin-3-sulfonsäure,
Anilin-3,5-disulfonsäure,
2-Aminonaphthalin-4,8-disulfonsäure,
2-Aminonaphthalin-6,8-disulfonsäure,
1-Aminonaphthalin-4,6-disulfonsäure,
1-Aminonaphthalin-4,7-disulfonsäure,
2-Aminonaphthalin-3,6,8-trisulfonsäure.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in violetten Tönen färben.

Beispiel 274

0,1 Mol des Kupferkomplexes der Formel

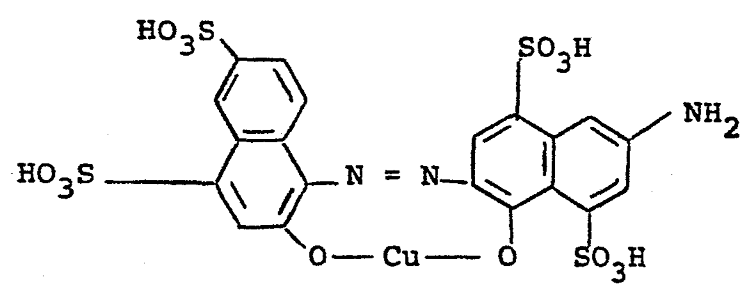

die durch Kupplung von 1-Aminonaphthalin-4,6-disulfonsäure mit 2-Acetylamino-5-hydroxynaphthalin-4,8-disulfonsäure anschließender oxydativer Kupferung und Ver-

0139248

seifung der Acetylaminogruppe erhalten werden kann, werden in 1500 Volumenteilen Wasser bei pH 6,5 gelöst und bei ca. 50°C mit 25 Teilen 2-Fluordichlormethyl-4,6-difluor-5-chlorpyrimidin portionsweise versetzt, wobei die freiwerdende Säure so mit einer Sodalösung neutralisiert wird, daß während der Kondensationszeit von etwa 2 Stunden ein pH von 6,5 gehalten wird.

Nach beendeter Umsetzung wird der Farbstoff der Formel

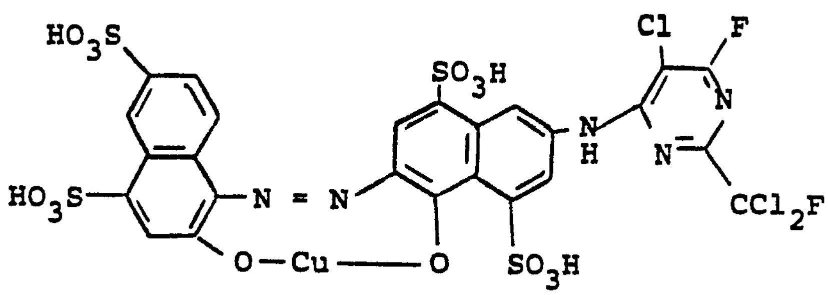

ausgesalzen, isoliert und bei ca. 50°C im Vakuum getrocknet.

Man erhält ein dunkles Pulver, das sich in Wasser mit blauer Farbe löst und Baumwolle in rotstichig blauen Farbtönen färbt. Der gleiche Farbstoff kann durch Kupplung der Diazoniumverbindung aus 1-Aminonaphthalin-4,6-disulfonsäure mit dem Kondensationsprodukt aus 2-Amino-5-hydroxynaphthalin-4,8-disulfonsäure und 2-Fluordichlormethyl-4,6-difluor-5-chlorpyrimidin und anschließender oxydativer Kupferung erhalten werden.

Farbstoffe, die Baumwolle in ähnlichen blauen Farbtönen

färbern, können erhalten werden, wenn man in diesem Beispiel die Diazoniumverbindung aus 1-Aminonaphthalin-4,6-disulfonsäure durch die der folgenden Amine ersetzt:

1-Aminonaphthalin-4,7-disulfonsäure,
1-Aminonaphthalin-4-sulfonsäure,
2-Aminonaphthalin-6,8-disulfonsäure,
2-Aminonaphthalin-4,6,8-trisulfonsäure,
2-Aminonaphthalin-3,6-disulfonsäure,
1-Amino-8-hydroxynaphthalin-4,6-disulfonsäure bzw. -3,6-disulfonsäure, in Form der o-Sulfonsäureester und abschließender Hydrolyse des Sulfonsäureesters.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in blauen Tönen färben.

Beispiel 275

0,1 Mol des 1:2-Chromkomplexes der Formel

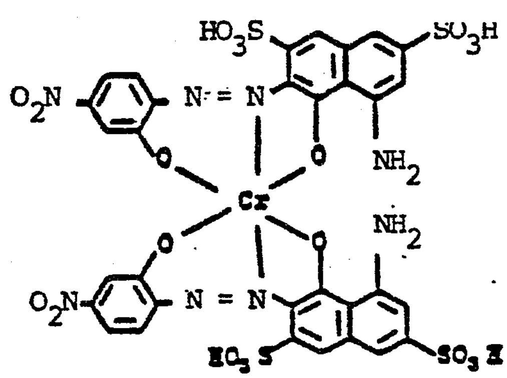

der durch Kupplung von diazotiertem 5-Nitro-2-aminophenol mit 1-Amino-8-hydroxynaphthalin-3,6-disulfonsäure und anschließender Umwandlung in den 1:2-Cr-Komplex erhalten werden kann, werden in 1000 Teilen Wasser bei pH 7 gelöst und mit 60 Teilen 2-Fluordichlormethyl-4,6-difluor-5-chlorpyrimidin bei 50-60°C kondensiert. Die Neutralisation der freiwerdenden Säure erfolgt dabei durch Zutropfen einer verdünnten Sodalösung. Nach beendeter Kondensation wird der Farbstoff ausgesalzen, isoliert und getrocknet. Er fällt in Form eines dunklen Pulvers an, das Baumwolle in grünstichig grauen Farbtönen färbt.

Ersetzt man in diesem Beispiel den reinen Chromkomplex durch eine 1:1-Mischung aus dem Cr-Komplex und dem entsprechenden Co-Komplex, so erhält man eine Farbstoffmischung, die Baumwolle in neutralen, lichtechten Schwarz- bzw. Grautönen färbt.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in grünstichig bis neutralen lichtechten Schwarz- bzw. Grautönen färben.

Beispiel 276

0,1 Mol des Co-Komplexes der Formel

0139248

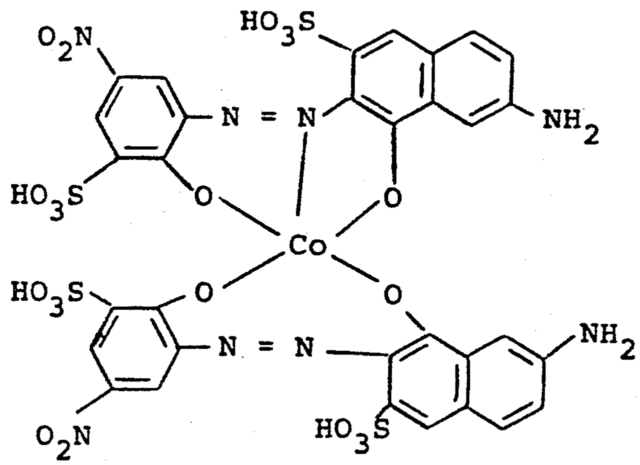

werden in 800 Volumenteilen Wasser bei pH 6 gelöst und mit 60 Teilen 2-Fluordichlormethyl-4,6-difluor-5-chlorpyrimidin unter kräftigem Rühren kondensiert. Die freiwerdende Säure wird durch Zutropfen einer 20 %igen Sodalösung neutralisiert. Nach beendeter Kondensation wird der erhaltene Reaktivfarbstoff ausgesalzen, isoliert und getrocknet. Er fällt in Form eines dunklen Pulvers an, das sich in Wasser mit brauner Farbe löst und Baumwolle in lichtechten Brauntönen färbt.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluor-pyrimidin oder 2-Fluordichlormethyl-4,6-difluorpyrimidin und verfährt analog wie oben beschrieben, so erhält man Farbstoffe, die Wolle und Baumwolle in lichtechten Brauntönen färben.

Beispiel 277

0,1 Mol des Kondensationsproduktes aus 1,3-Diaminobenzol-4-sulfonsäure und 2-Fluordichlormethyl-4,6-difluor-5-chlorpyrimidin wird wie in Beispiel 4 beschrieben diazotiert und die Suspension bei pH 2-3 mit 0,1 Mol 1-Amino-8-hydroxynaphthalin-3,6-disulfonsäure gekuppelt. Nach beendeter Kupplung wird die dunkelrote Farbstofflösung mit der Suspension der Diazotierung aus Anilin-2,5-disulfonsäure versetzt. Zur zweiten Kupplung wird der pH-Wert des Reaktionsgemisches durch Zutropfen einer 20 %igen Sodalösung auf 7-8 gestellt. Nach beendeter Kupplung wird der Farbstoff der Formel

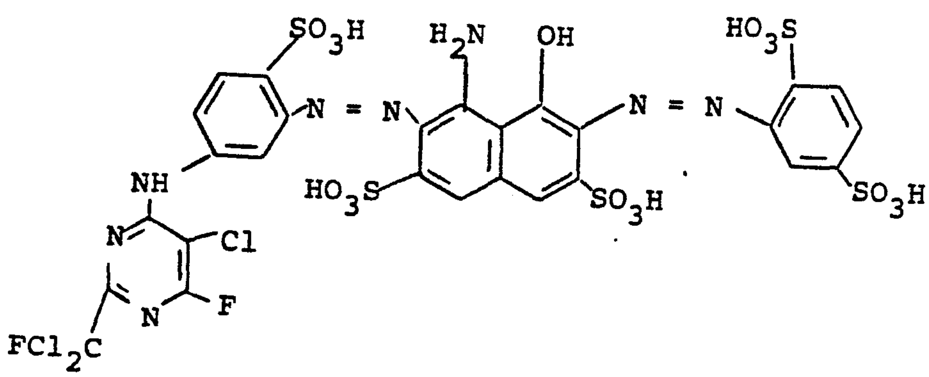

ausgesalzen, isoliert und getrocknet. Er stellt dann ein dunkles Pulver dar, das sich in Wasser mit blauer Farbe löst und Baumwolle in dunkelblauen bis schwarzen Farbtönen färbt.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in dunkelblauen bis schwarzen Tönen färben.

Verwendet man in den oben beschriebenen Farbstoffe anstelle von 1-Amino-8-hydroxynaphthalin-3,6-disulfonsäure 1-Amino-8-hydroxynaphthalin-4,6-disulfonsäure, so erhält man Farbstoffe, die Wolle und Baumwolle in dunkelblauen bis schwarzen Tönen färben.

Verwendet man in den oben beschriebenen Farbstoffen anstelle von 1-Amino-8-hydroxynaphthalin-3,6-disulfonsäure 1-Amino-8-hydroxynaphthalin-4-sulfonsäure, so erhält man Farbstoffe, die Wolle und Baumwolle in schwarzen Tönen färben.

Beispiel 278

Die in saurem pH-Bereich ausgeführte Kupplung von 0,1 Mol der Diazoniumverbindung aus Anilin-4-sulfonsäure mit 0,1 Mol 1-Amino-8-hydroxynaphthalin-3,6-disulfonsäure führt zu einer dunkelroten Lösung des Monoazofarbstoffs, der bei pH 6-7 mit 0,1 Mol der Diazoniumverbindung aus dem Kondensationsprodukt von 1,3-Diaminobenzol-4-sulfonsäure und 2-Fluordichlormethyl-4,6-difluor-5-dichlorpyrimidin zu einem dunkelblauen Farbstoff gekuppelt werden kann. Nach Aussalzen, Isolieren und Trocknen fällt der Farbstoff der Formel

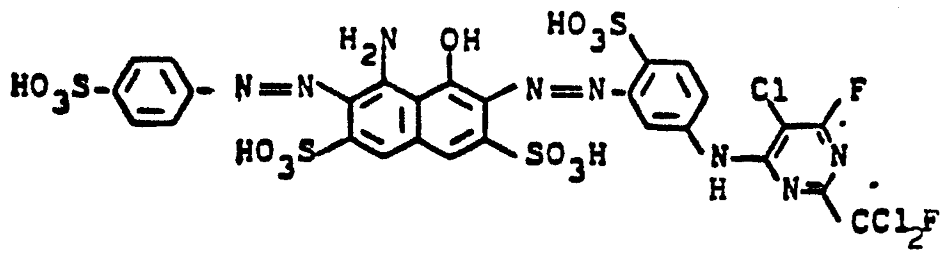

als dunkles Pulver an, das sich in Wasser mit blauer Farbe löst und Baumwolle in dunkleblauen bis schwarzen Farbtönen färbt.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in dunkelblauen bis schwarzen Tönen färben.

Verwendet man in dem oben beschriebenen Farbstoff anstelle von 1-Amino-8-hydroxynaphthalin-3,6-disulfonsäure 1-Amino-8-hydroxynaphthalin-4,6-disulfonsäure, so erhält man einen Farbstoff, der Wolle und Baumwolle in blauen bis schwarzen Tönen färbt.

Beispiel 279

0,1 Mol des in üblicher Weise durch Einwirkung von Chlorsulfonsäure und Thionylchlorid auf Kupferphthalocyanin frisch hergestellten Kupferphthalocyanin-tetrasulfochlorids werden in Form des feuchten, gut gewachsenen

Saugkuchens in 1000 Teilen Wasser und 500 Teilen Eis suspendiert und bei pH 8-9 mit 0,1 Mol des Kondensationsproduktes aus 1,3-Diaminobenzol und 2-Fluordichlormethyl-4,6-difluor-5-chlorpyrimidin zur Umsetzung gebracht. Durch Zutropfen von 20 %iger Sodalösung wird dabei ein pH-Wert von ca. 8,5 aufrechterhalten. Nach beendeter Kondensation wird der Reaktivfarbstoff der Formel

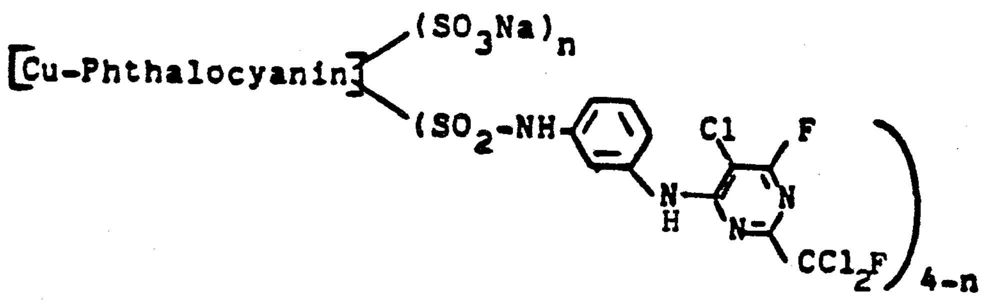

n =~ 2-3

ausgesalzen, gewaschen und bei 50-60°C im Vakuum getrocknet. Er stellt ein dunkelblaues, in Wasser mit blauer Farbe lösliches Pulver dar, das Baumwolle in klaren grünstichig blauen Farbtönen färbt.

Verwendet man anstelle von 2-Fluordichlormethyl-4,6-difluor-5-chlorpyrimidin die entsprechenden Mengen 2-Difluormethyl-4,6-difluor-5-chlorpyrimidin, 2-Trifluorpyrimidin oder 2-Fluordichlormethyl-4,6-difluorpyrimidin und verfährt analog wie oben beschrieben, so erhält man Farbstoffe, die Wolle und Baumwolle in klaren grünstichig blauen Farbtönen färben.

Beispiel 280

0,01 Mol des Triphendioxazins der Formel

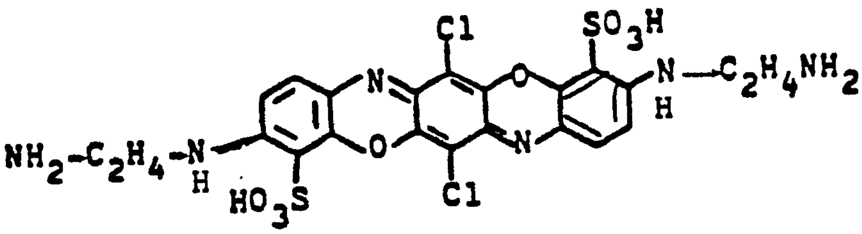

werden in 1 l Wasser bei Raumtemperatur gelöst und bei einem pH-Wert von 7-7,5 mit 5 g 2-Fluordichlormethyl-4,6-difluor-5-chlorpyrimidin umgesetzt, der pH-Wert wird mit Sodalösung gehalten. Es wird 1 Stunde nachgerührt, das ausgefallene Produkt abfiltriert und bei 60°C getrocknet. Man erhält ein dunkelblaues Pulver, das Baumwolle und Wolle in leuchtend blauen Tönen färbt.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlor-

methyl-4,6-difluorpyrimidin und verfährt analog wie oben beschrieben, so erhält man Farbstoffe, die Wolle und Baumwolle in leuchtend blauen Tönen färben.

Nach gleichen Verfahren und mit den genannten Difluorpyrimidinen liefern auch die folgenden Verbindungen im ersten Falle leuchtend blaue, im zweiten Fall leuchtend grünstichig blaue Färbungen auf Baumwolle und Wolle

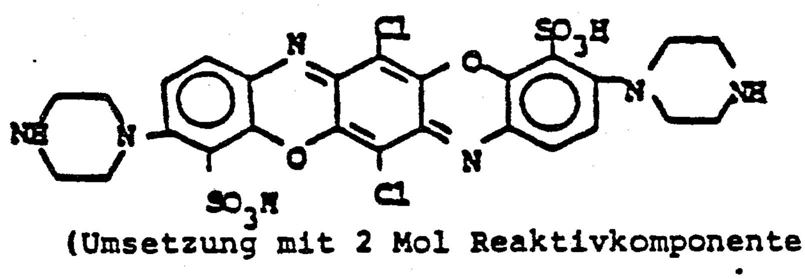

(Umsetzung mit 2 Mol Reaktivkomponente)

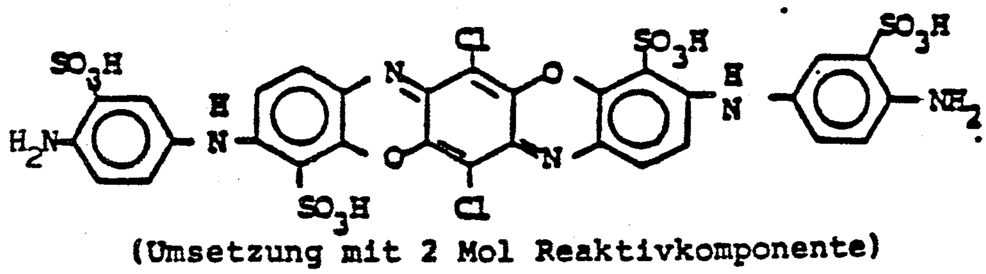

(Umsetzung mit 2 Mol Reaktivkomponente)

Beispiel 281

0,1 Mol des Kupferkomplexes von N-(2-Carboxy-5-sulfophenyl)-N-(2'-hydroxy-3'-amino-5'-sulfophenyl)-ms-phenylformazan-di-Natriumsalz werden in 500 ml Wasser gelöst und bei 30-40°C mit 25 Teile 2-Fluordichlormethyl-4,6-difluor-5-chlorpyrimidin versetzt.

Durch Zugabe von Sodalösung wird ein pH-Wert von 6-6,5 aufrecht erhalten. Man salzt mit Natriumchlorid aus, saugt den ausgefallenen Farbstoff ab und trocknet bei 30-40°C im Vakuum.

Der erhaltene Farbstoff der Formel

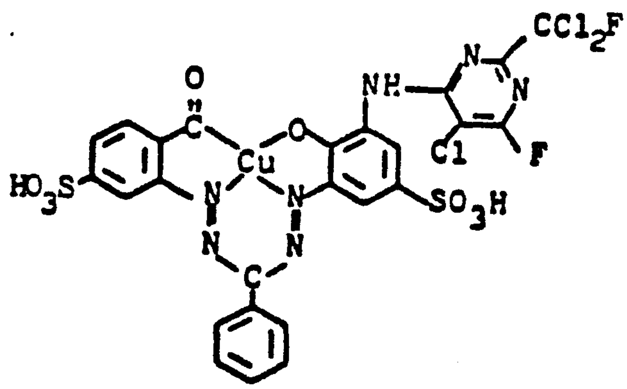

färbt Zellulose- und Polyamidfasern in echten blauen Tönen.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in echten blauen Tönen färben.

Verwendet man die in der folgenden Tabelle aufgeführten Kupferkomplexe und die oben angegebenen Difluorpyrimidine und verfährt wie oben angegeben, so erhält man weitere Farbstoffe, die Zellulose- und Polyamidfasern in echten blauen Tönen färben.

| Beispiel Nr. | Aminoformazan | Nuance auf Baumwolle |
|---|---|---|
| 282 | N-(2-Hydroxy-3-amino-5-sulfophenyl)-N'-(2'-carboxy-4'-sulfophenyl)-ms-(2"-chlor-5"-sulfophenyl)-formazan, Cu-Komplex, | blau |
| 283 | N-(2-Hydroxy-5-amino-3-sulfophenyl)-N'-(2',5'-disulfophenyl)-ms-phenyl-formazan, Cu-Komplex | blau |
| 284 | 2-(2-Carboxy-4-aminophenyl)-N'-(2'-hydroxy-5'-methylsulfonyl-3'-sulfo-phenyl)-ms-(2"-sulfophenyl)-formazan, Cu-Komplex, | blau |
| 285 | N-(2-Carboxy-5-sulfophenyl)-N'-(2'-hydroxy-3',5'-disulfophenyl)-ms-(3"-aminophenyl)-formazan, Cu-Komplex | grünstichig blau |
| 286 | N-(4-Amino-2-sulfophenyl)-N'-(2'-hydroxy-4'-sulfophenyl)-ms-(4"-chlor-3"-sulfophenyl)-formazan, Cu-Kompex, | blau |
| 287 | N-(2-Hydroxy-3-amino-5-sulfophenyl)-N'-(2'-hydroxy-4'-sulfophenyl)-ms-(2"-sulfophenyl), Cu-Komplex, | marineblau |
| 288 | N-(2-Carboxy-5-sulfophenyl)-N'-(2'-hydroxy-5'-amino-3'-sulfophenyl)-ms-(4"-sulfophenyl)-formazan, Cu-Komplex, | blau |
| 289 | N-(2-Carboxy-5-sulfophenyl)-N'-(2'-hydroxy-3'-amino-5'-sulfophenyl)-ms-phenylformazan, Cu-Komplex | blau |
| 290 | N-(2-Carboxy-4-sulfophenyl)-N'-(2'-hydroxy-3'-amino-5'-sulfophenyl)-ms-phenylformazan, Cu-Komplex, | blau |
| 291 | N-(2,4-Disulfophenyl)-N'-(2'-hydroxy-4,6-disulfophenyl)-ms-(3"-aminophe-nyl)-formazan, Cu-Komplex, | blau |
| 292 | N-(2-Carboxy-5-sulfophenyl)-N'-(2'-hydroxy-3'-amino-5'-sulfophenyl-ms-(4"-methoxyphenyl)-formazan, Cu-Komplex, | blau |

0139248

| Beispiel Nr. | Aminoformazan | Nuance auf Baumwolle |
|---|---|---|
| 293 | N-(2-Carboxy-5-sulfophenyl)-N'-(2'-hydroxy-4'-methylsulfonyl-6'-sulfophenyl)-ms-(3"-aminophenyl)-formazan, Cu-Komplex, | blau |
| 294 | N-(2-Hydroxy-5-sulfophenyl)-N'-(2'-hydroxy-3',5'-disulfophenyl-ms-(4"-aminophenyl)-formazan, Cu-Komplex, | blau |
| 295 | N-(2-Carboxy-5-sulfophenyl)-N'-(2'-hydroxy-3'-amino-5'-sulfophenyl)-ms-(4"-methyl-3"-bromphenyl)-formazan, Cu-Komplex, | blau |
| 296 | N-(2-Carboxy-4-aminophenyl)-N'-(2'-hydroxy-4'-sulfonaphth-1'-yl)-ms-(2"-sulfophenyl)-formazan, Cu-Komplex | blau |

Beispiel 297

0,1 Mol der bekannten Kupferkomplexverbindung der Formel

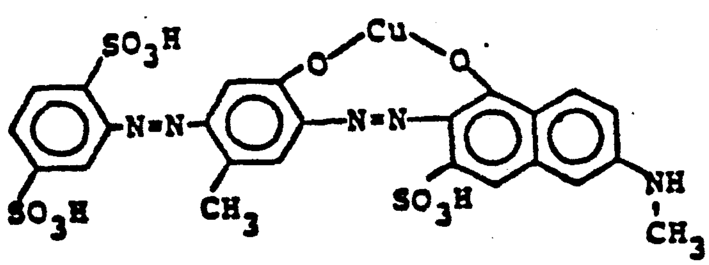

werden in 1000 Volumenteilen Wasser bei pH 6,5 gelöst und bei 40-50°C mit 30 Teilen 2-Fluordichlormethyl-4,6-difluor-5-chlorpyrimidin portionsweise versetzt, wobei die freiwerdende Säure so mit Sodalösung neutralisiert wird, daß während der Kondensationszeit von ca. 2 Stunden ein pH-Wert von 6,5 gehalten wird.

Nach beendeter Umsetzung wird der Farbstoff der Formel

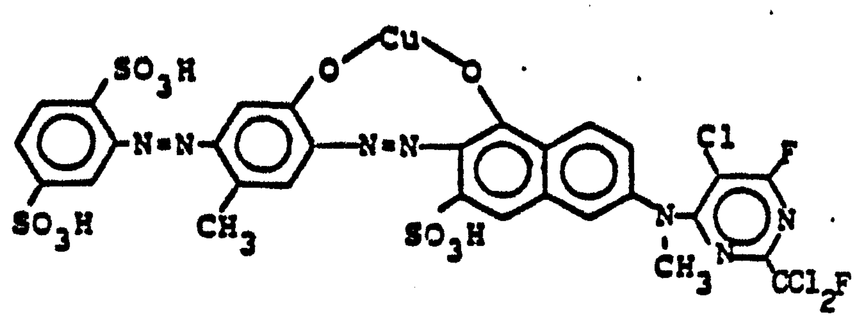

ausgesalzen, isoliert und bei 50°C im Vakuum getrocknet.

Man erhält ein dunkles Pulver, das sich in Wasser mit blauer Farbe löst und Baumwolle in marineblauen Tönen färbt.

Farbstoffe, die Baumwolle in ähnlichen marineblauen Farbtönen färben, können erhalten werden, wenn man in obigem Beispiel die Kupplungskomponente 6-N-Methyl-amino-1-hydroxynaphthalin-3-sulfonsäure durch die folgenden Aminohydroxynaphthalinsulfonsäuren ersetzt:

6-Amino-1-hydroxynaphthalin-3-sulfonsäure
6-N-Methylamino-1-hydroxynaphthalin-3,5-disulfonsäure
6-Amino-1-hydroxynaphthalin-3,5-disulfonsäure
6-Amino-1-hydroxynaphthalin-4,8-disulfonsäure
7-Amino-1-hydroxynaphthalin-3,6-disulfonsäure
5-Amino-1-hydroxynaphthalin-3-sulfonsäure.

Weitere Farbstoffe, die Baumwolle in marineblauen Farbtönen färben, können erhalten werden, wenn man die folgenden bekannten Kupferkomplexverbindungen der Formeln

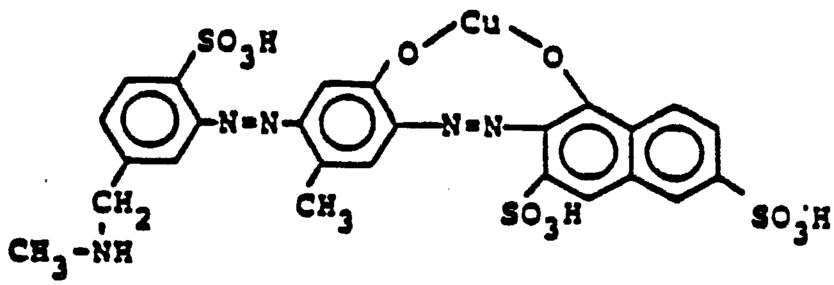

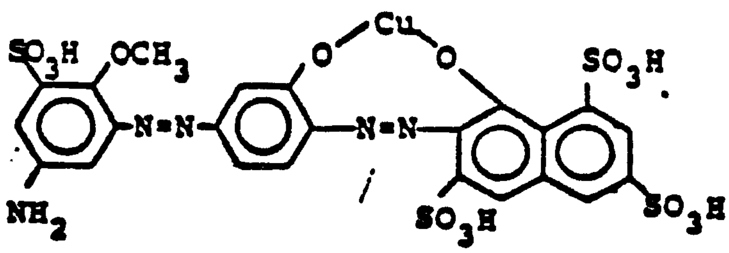

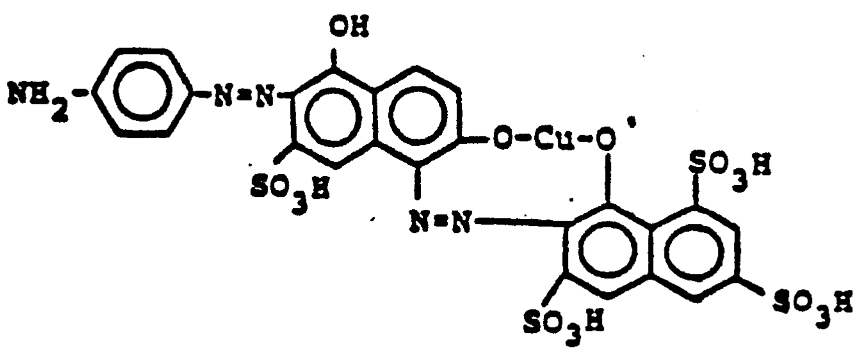

mit 2-Fluordichlormethyl-4,6-difluor-5-chlorpyrimidin umsetzt.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in marineblauen Farbtönen färben.

Beispiel 298

0,1 Mol der bekannten Aminodisazoverbindung der Formel

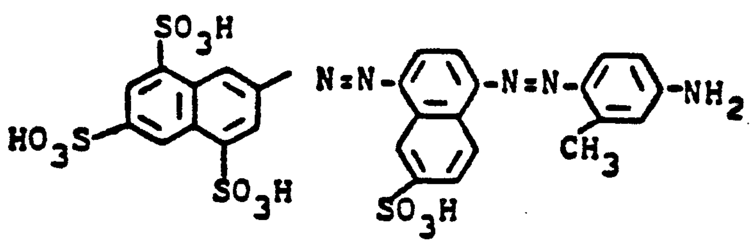

werden in 1500 Volumenteilen Wasser bei pH 6,5 gelöst und bei 40-50°C mit 25 Teilen 2-Fluordichlormethyl-4,6-difluor-5-chlorpyrimidin portionsweise versetzt, wobei die freiwerdende Säure so mit Sodalösung neutralisiert wird, daß während der Kondensationszeit von ca. 2 Stunden ein pH-Wert von 6,5 gehalten wird. Nach beendeter Umsetzung wird der Farbstoff der Formel

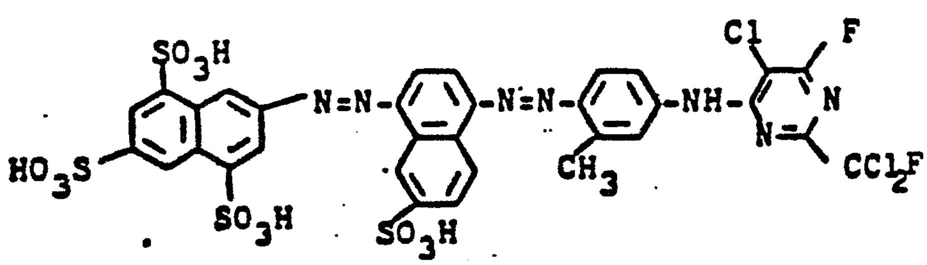

ausgesalzen, isoliert und bei 50°C im Vakuum getrocknet.

Man erhält ein braunes Pulver, das sich in Wasser mit dunkelbrauner Farbe löst und Baumwolle in braunen Tönen färbt.

Farbstoffe, die Baumwolle in orangen bis braunen Farbtönen färben, können erhalten werden, wenn man die Aminodisazofarbstoffe der folgenden Tabelle mit 2-Fluordichlormethyl-4,6-difluor-5-chlorpyrimidin umsetzt.

| Beispiel | Aminodisazofarbstoff | Farbton der Reaktivfärbung |
|---|---|---|
| 299 | 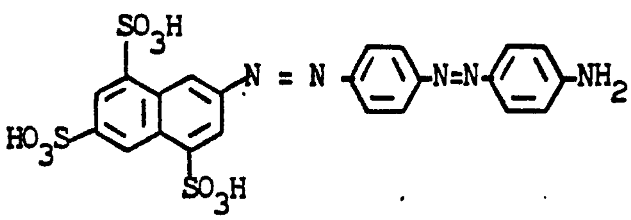 | Orange |
| 300 | 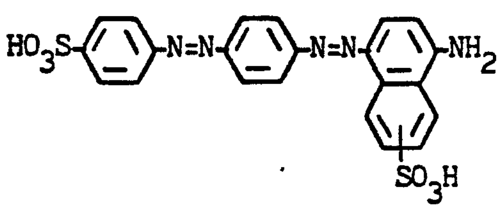 | Orange-Braun |
| 301 | 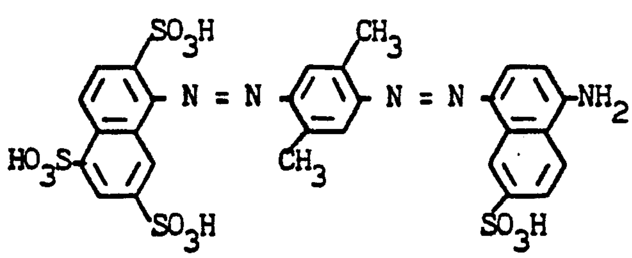 | Braun |

Fortsetzung

| Beispiel | Aminodisazofarbstoff | Farbton der Reaktivfärbung |
|---|---|---|
| 302 | 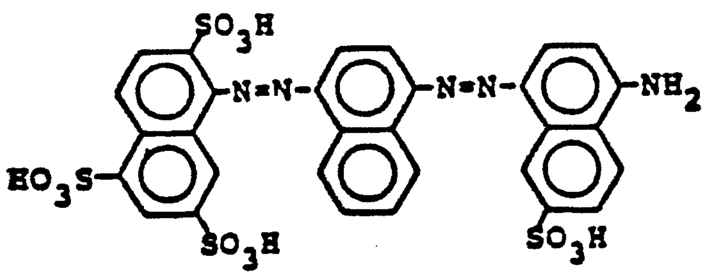 | Braun |

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in orangen bis braunen Tönen färben.

Beispiel 303

0,1 Mol des bekannten Diaminotriazols der Formel

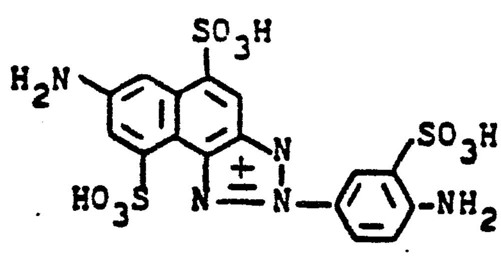

werden in 1000 Volumenteilen Wasser bei pH 6 gelöst und bei 40-50°C mit 25 Teilen 2-Fluordichlormethyl-5-chlor-4,6-difluorpyrimidin - in Form einer Emulsion in Wasser portionsweise versetzt. Die freiwerdende Säure wird durch Zutropfen von 20 %iger Sodalösung neutralisiert, so daß während der Kondensationszeit von ca. 2 Stunden ein pH-Wert von 6,5 gehalten wird.

Nach beendeter Kondensation wird das Monoaminotriazol wie üblich angesäuert, diazotiert und mit 0,1 Mol Barbitursäure sodaalkalisch gekuppelt. Nach beendeter Kupplung wird der Farbstoff der Formel

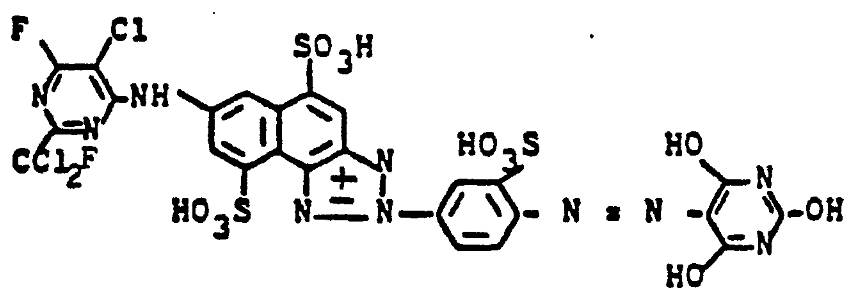

ausgesalzen, isoliert und bei 50°C im Vakuum getrocknet. Man erhält ein gelbes Pulver, das sich in Wasser mit gelber Farbe und Baumwolle in brillanten grünstichig gelben Tönen färbt.

Weitere Farbstoffe, die Baumwolle in gelben Farbtönen färben, können erhalten werden, wenn man die Barbitursäure durch folgende Kupplungskomponenten ersetzt:

2,6-Dihydroxypyridin-4-carbonsäure
1-/4'-Sulfophenyl/-3-carboxypyrazolon-(5)
1-/2'-Methyl-4'-sulfophenyl/-3-carbxypyrazolon-(5)
1,4-Dimethyl-2-hydroxy-pyridon-(6)-sulfonsäure.

Verwendet man anstelle von 2-Fluordichlormethyl-4,6-difluor-5-chlorpyrimidin die entsprechenden Mengen 2-Difluorchlormethyl-4,6-difluor-5-chlorpyrimidin, 2-Trifluormethyl-4,5,6-trifluorpyrimidin oder 2-Fluordichlormethyl-4,6-difluorpyrimidin und verfährt analog wie oben beschrieben, so erhält man Farbstoffe, die Wolle und Baumwolle in gelben Tönen färben.

In der folgenden Tabelle sind weitere aminogruppenhaltige Chromophore aufgeführt, die mit 2-Fluordichlormethyl-4,6-difluor-5-chlorpyrimidin, 2-Difluor-chlormethyl-4,6-difluor-5-chlorpyrimidin, 2-Trifluormethyl-4,5,6-trifluorpyrimidin oder 2-Fluordichlormethyl-4,6-difluorpyrimidin zu Reaktivfarbstoffen umgesetzt werden können, die Baumwolle in den angegebenen Nuancen färben.

Beispiel:

304 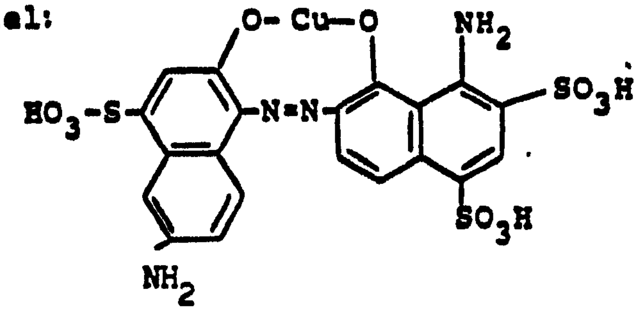 blau

305 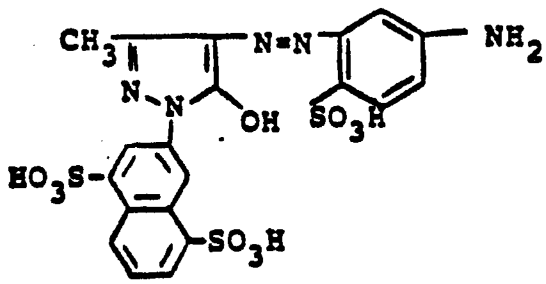 gelb

306 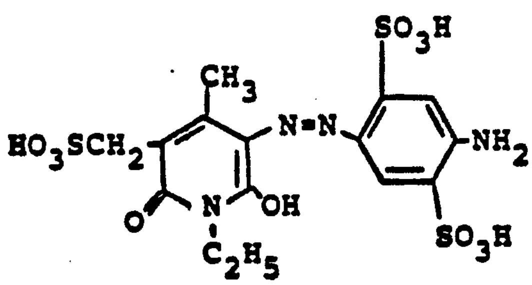 gelb

307 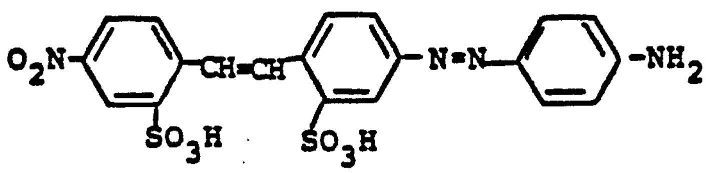 gelb

308 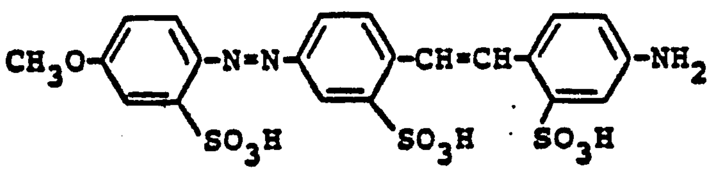 gelb

**Beispiel:**

309 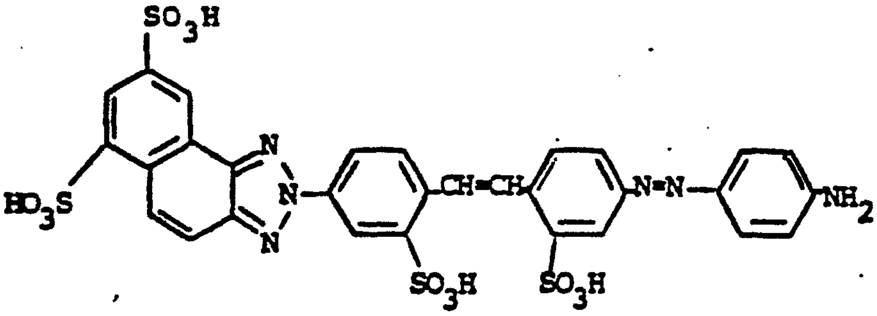 gelb

310 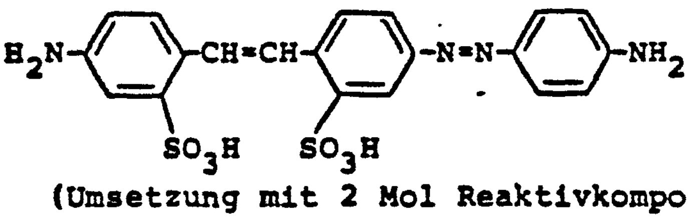 gelb

(Umsetzung mit 2 Mol Reaktivkomponente)

311 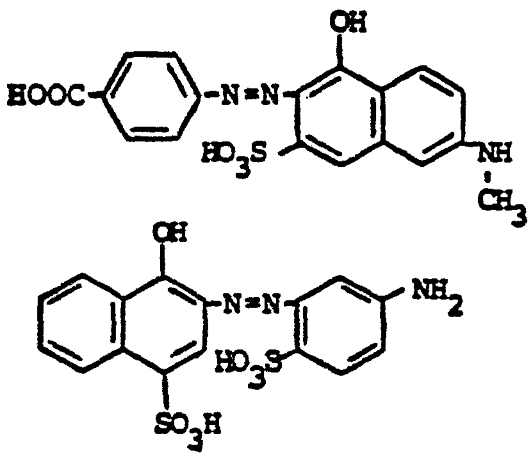 orange

312 scharlach

313 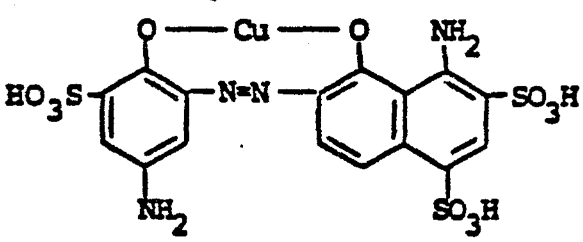 rotst. blau

**Beispiel:**

314 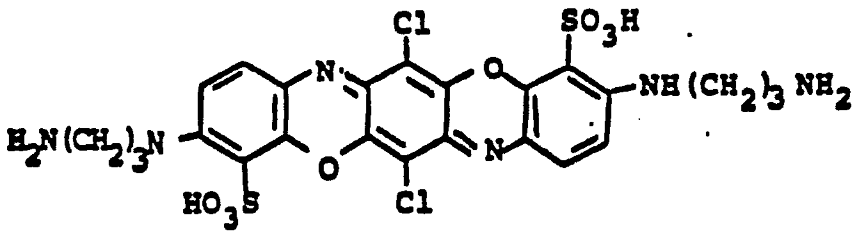 blau

(Umsetzung mit 2 Mol Reaktivkomponente)

315 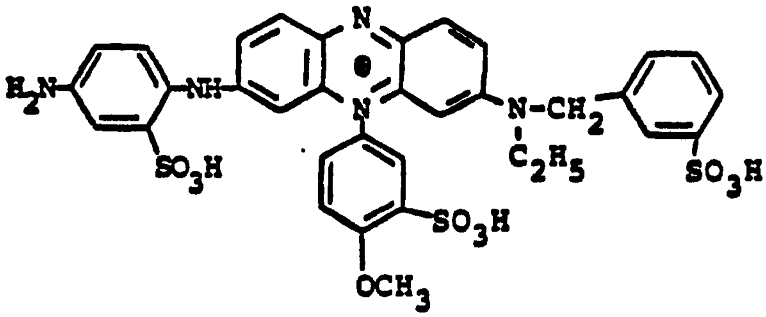 rotst. blau

316 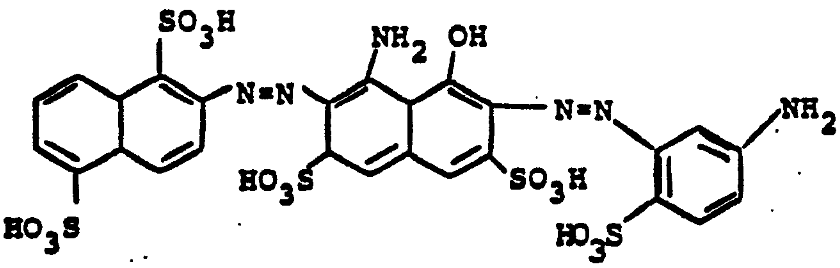 marine blau

317 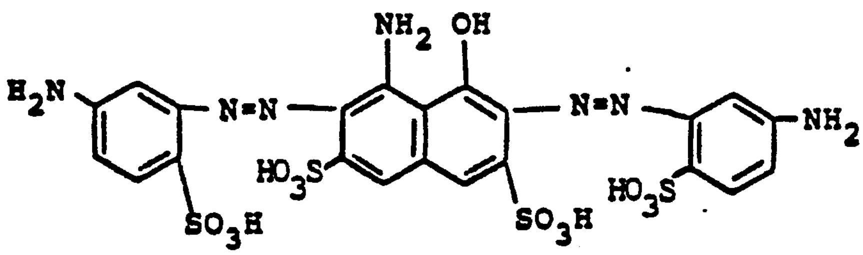 marine blau

(Umsetzung mit 2 Mol Reaktivkomponente)

 

Beispiel:

318 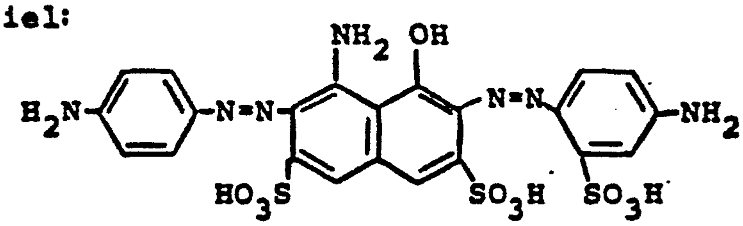 grün-blau

(Umsetzung mit 2 Mol Reaktivkomponente)

319 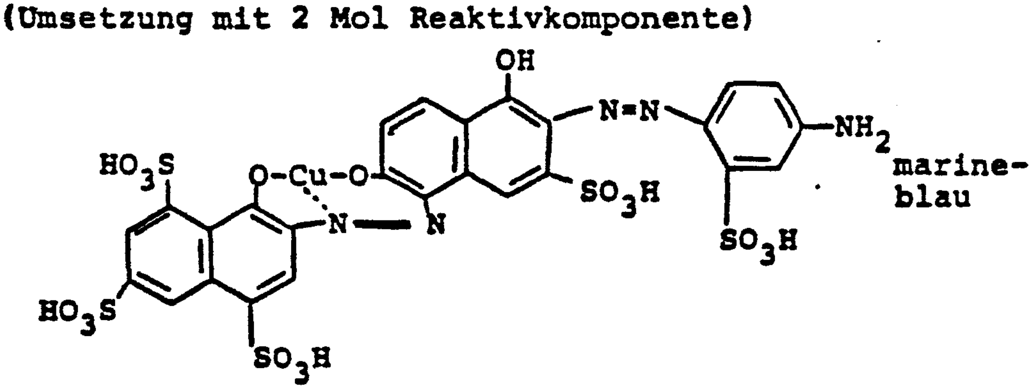 marine-blau

320 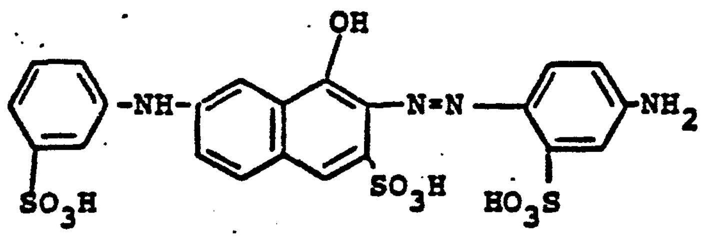 braun

321 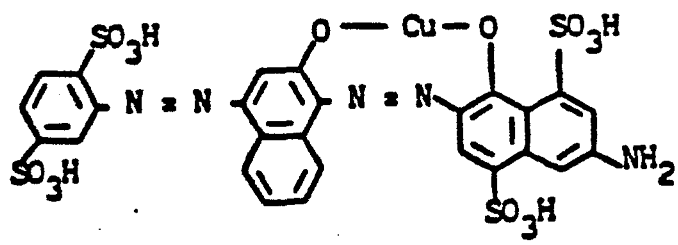 grün

322 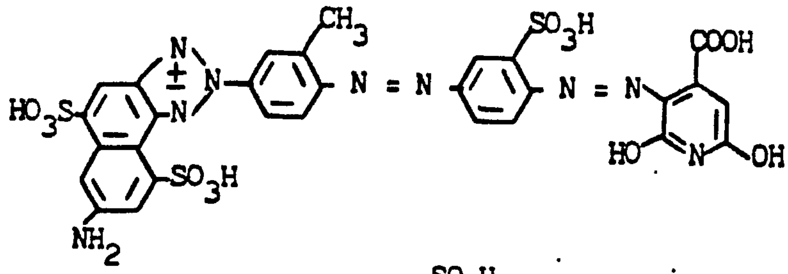 Orange

323 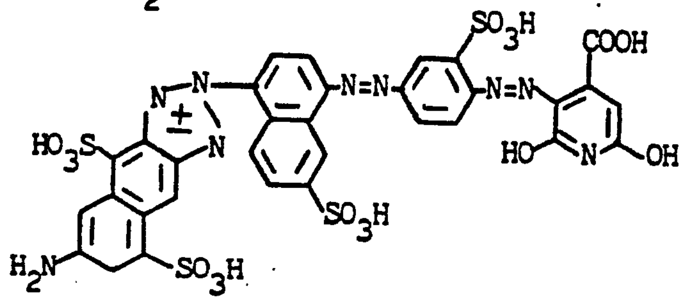 Scharlach

324 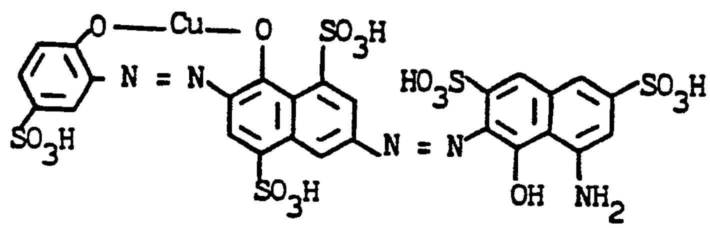 Dunkelblau

325 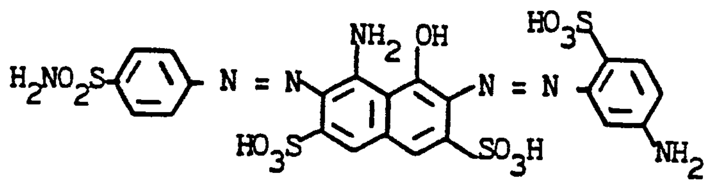 Marineblau

326 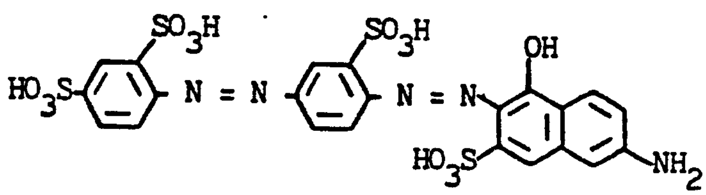 Rot

327 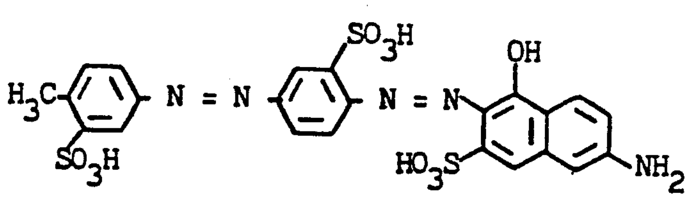 Rot

Beispiel:

328 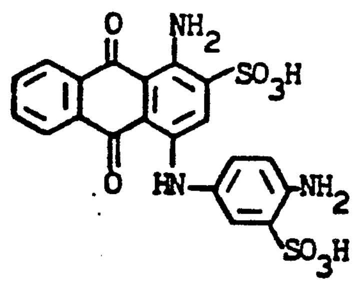

329 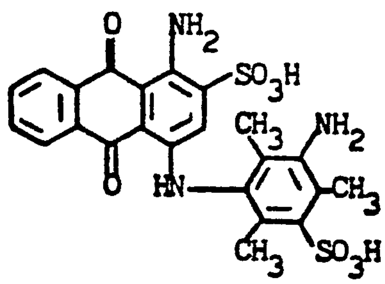

330 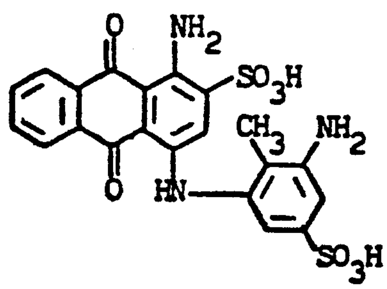

Patentansprüche

1. Reaktivfarbstoffe der Formel

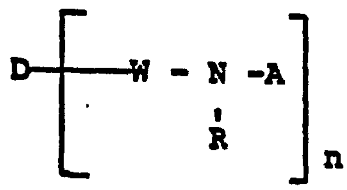

(I)

worin

D = Rest eines organischen Farbstoffs
W = direkte Bindung oder Brückenglied
R = H oder Alkyl
n = 1 oder 2
A = Rest der Formel

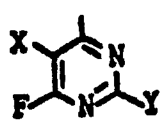

(II)

worin

X = H, F, Cl, Br und

Y = $CF_3$ oder 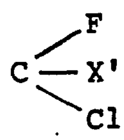 , worin X' = H, F, Cl, Br

mit der Maßgabe, daß falls Y = $CF_3$ ist, X für F steht.

2. Reaktivfarbstoffe gemäß Anspruch 1, dadurch gekennzeichnet, daß der Rest A eine der folgenden Bedeutungen a) bis k) besitzt:

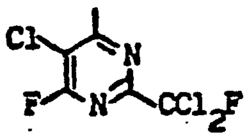
a

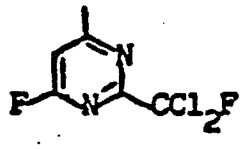
b

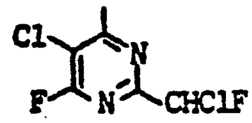
c

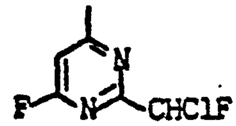
d

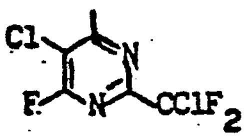
e

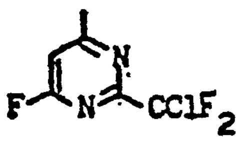
f

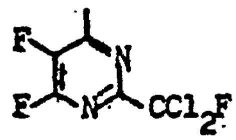
g

(III)

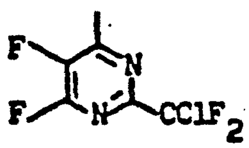
h

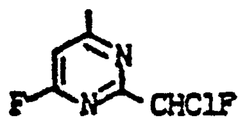
i

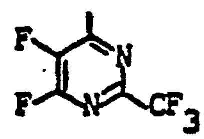
k

3. Reaktivfarbstoffe gemäß Ansprüchen 1 und 2, dadurch gekennzeichnet, daß W für eine direkte Bindung oder für eines der folgenden Brückenglieder steht:

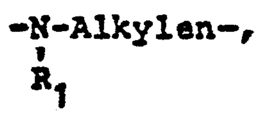

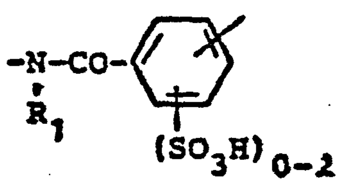

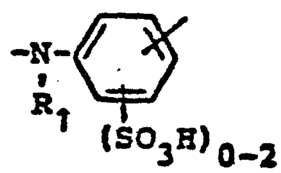

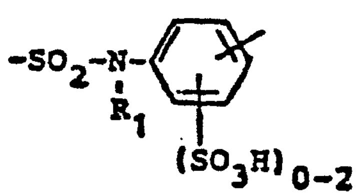

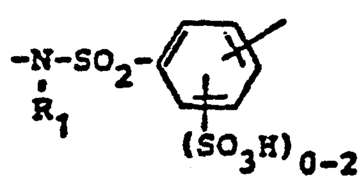

(IV)

-O-Alkylen-, 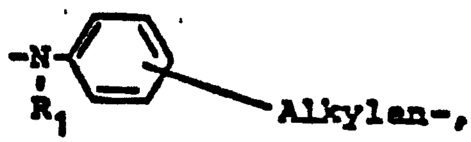

-S-Alkylen-, -Alkylen-, -Alkylen-CO-, -Alkylen-$SO_2$- ,

wobei $R_1$ für Wasserstoff oder Alkyl steht, und Alkylen einen Alkylenrest mit 1 bis 4 C-Atomen bedeutet.

4. Reaktivfarbstoffe gemäß Ansprüchen 1) bis 3), dadurch gekennzeichnet, daß folgende Farbstoffe der Strukturformel (I) vorliegen, wobei W, R, n und A die in Ansprüchen 1) bis 3) angegebene Bedeutung besitzen:

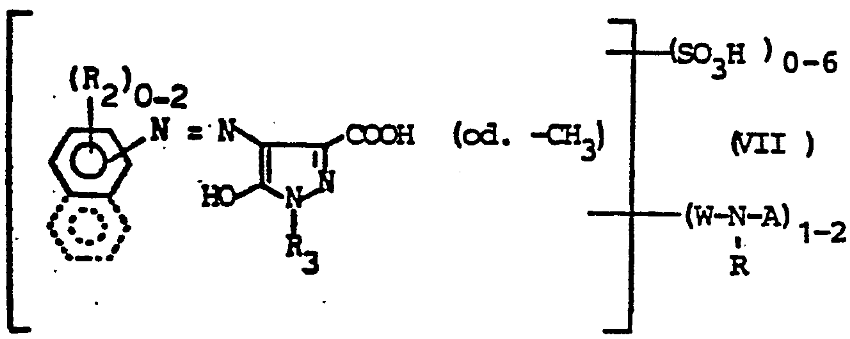

(VII)

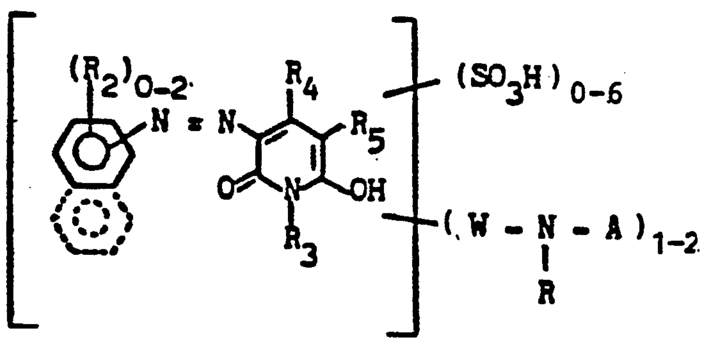

(VIII)

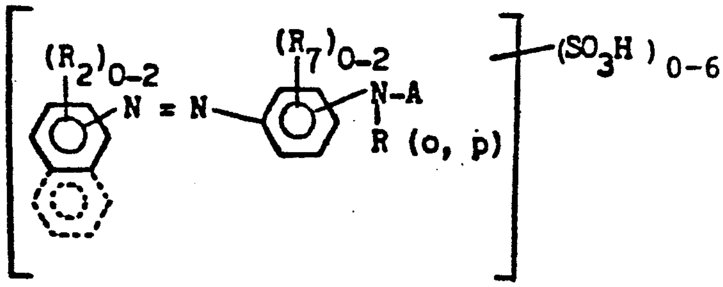

(IX)

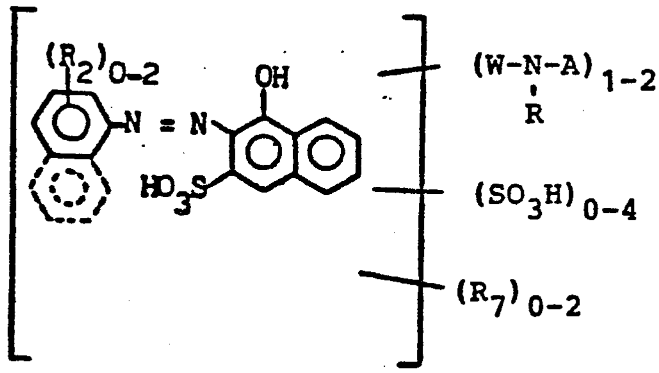

(X)

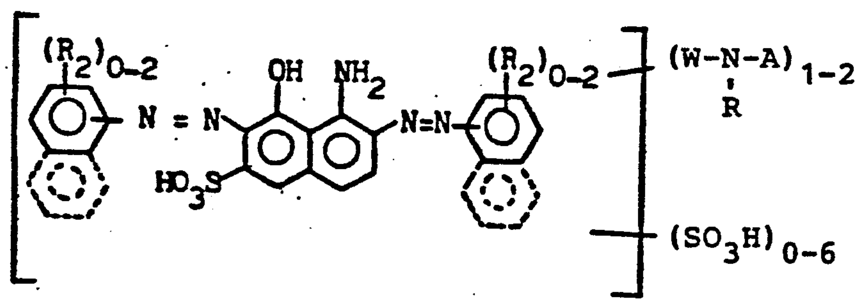

(XI)

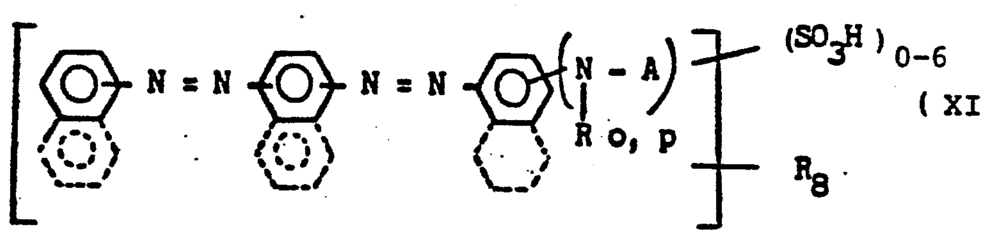

(XII)

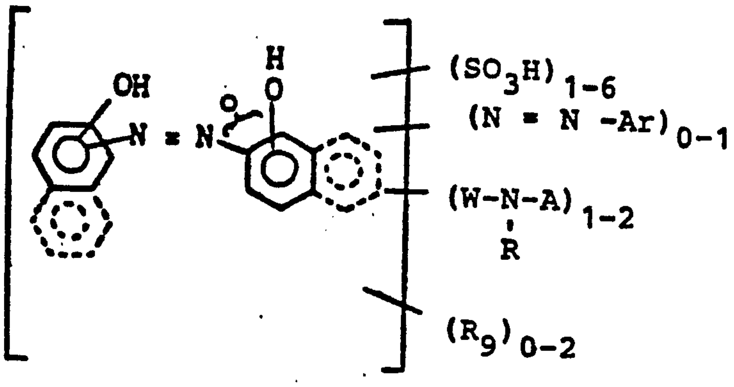

(XIII)

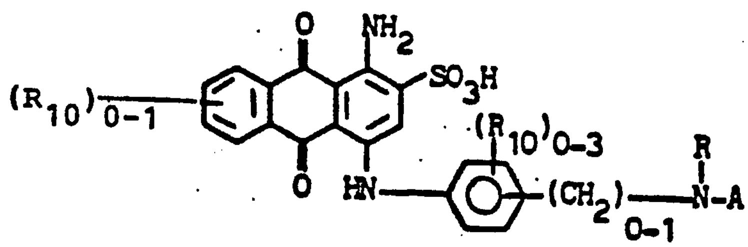

( XIV )

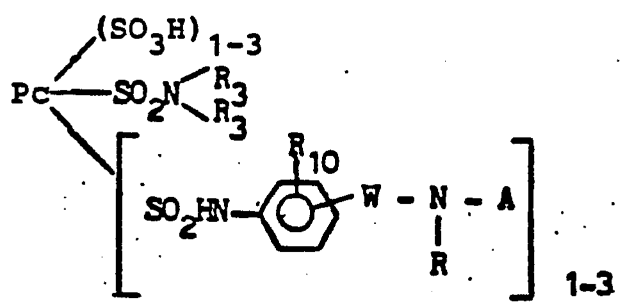

(XV)

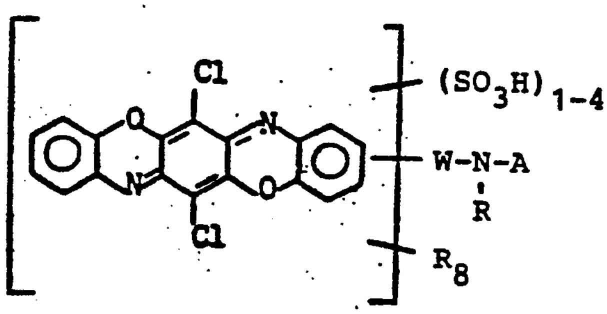

( XVI )

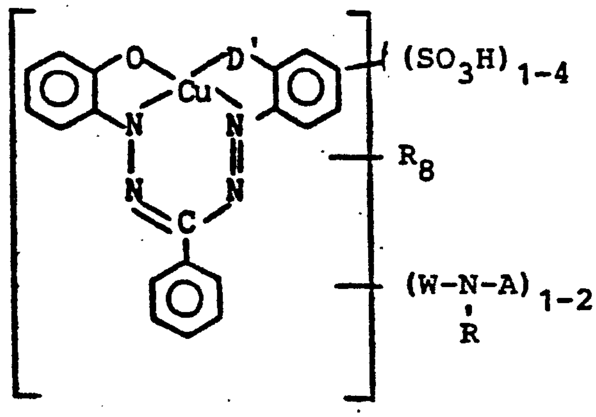

(XVII)

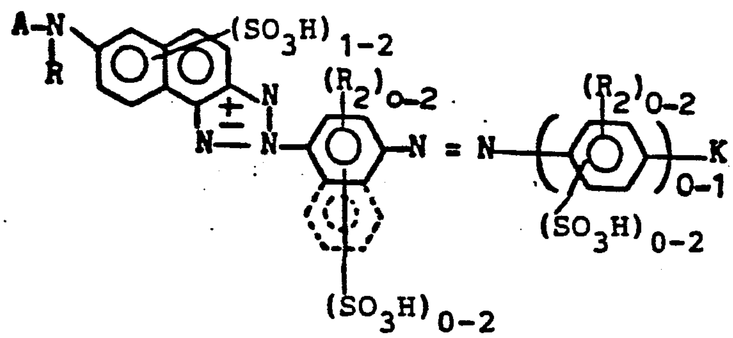

(XVIII)

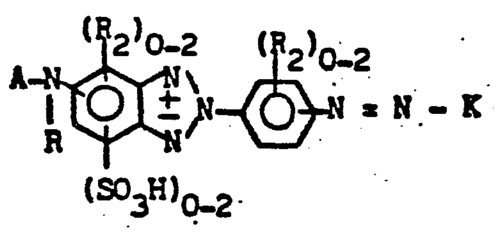

(XIX)

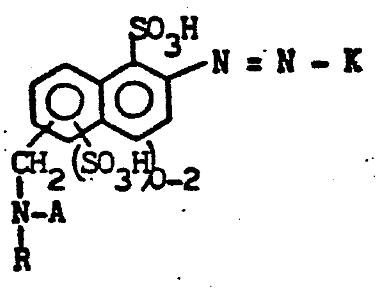

(XX)

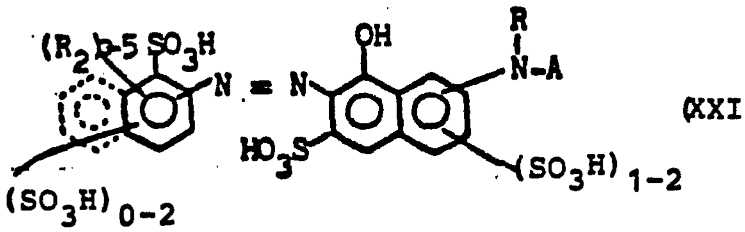

(XXI)

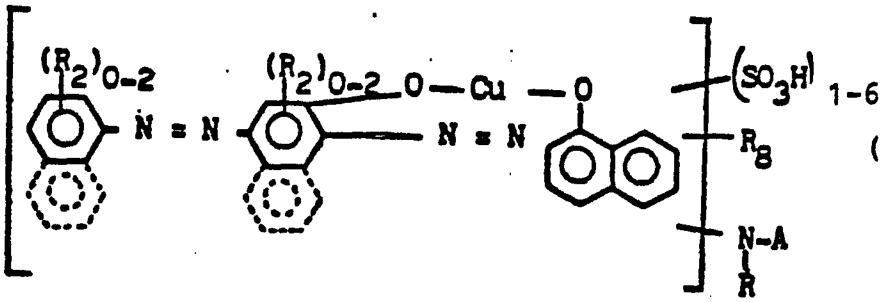

(XXII)

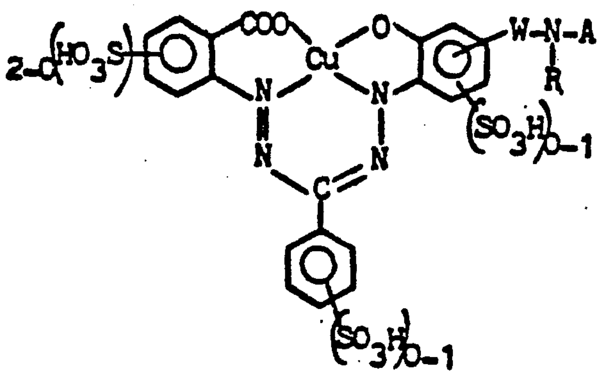

(XXIII)

und wobei in den Formeln (VII) bis (XXIII) die Substituenten folgende Bedeutungen besitzen:

$R_2$ = Alkyl, Alkoxy, Halogen,
$R_3$ = H, Alkyl, Aryl, Hetaryl, Aralkyl
$R_4$ = Alkyl, Aryl, Aralkyl, Hetaryl, $R_5$
$R_5$ = H, $COOR_3$, 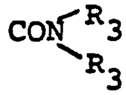 , CN, $CH_2-SO_3H$, $SO_3H$

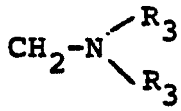

$R_7$ = H, Alkyl, Alkoxy, Acylamino, Amino,
o,p = in o- bzw. p-Stellung zur Azogruppe
$R_8$ = Halogen, Alkyl, Alkoxy, Acylamino, Amino, Hydroxy,
o = in ortho-Stellung zur Azogruppe
$R_9$ = $R_8$, $NO_2$,
$R_{10}$ = $SO_3H$, Halogen, Alkyl, Alkoxy, COOH
Pc = Cu- oder Ni-Phthalocyaninrest
D' = zur Komplexbildung befähigter Substituent,
K = Rest einer Kupplungskomponente,
Ar = Arylrest.

5. Verfahren zur Herstellung von Reaktivfarbstoffen der Formel

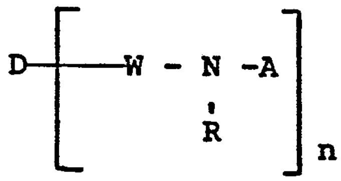

(I)

worin
D = Rest eines organischen Farbstoffs
W = direkte Bindung oder Brückenglied
R = H oder Alkyl,
n = 1 oder 2
A = Rest der Formel

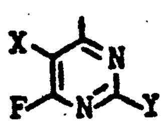

(II)

0139248

worin

X = H, F, Cl, Br und

Y = $CF_3$ oder 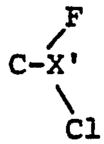 , worin X' = H, F, Cl, Br

mit der Maßgabe, daß falls Y = $CF_3$ ist, X für F steht,

dadurch gekennzeichnet, daß man

a) entweder Farbstoffe der Formel

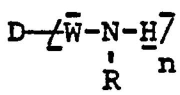 (V)

wobei D, W, R und n die oben angegebene Bedeutung besitzen,

mit n Mol eines Halogenpyrimidins der Formel

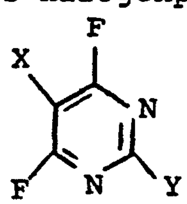 (VI)

worin X und Y die oben angegebene Bedeutung haben, kondensiert, oder

b) geeignete Vorprodukte mit Verbindungen der Formel (VI) kondensiert und anschließend die Farbstoffsynthese zu Verbindungen der Formel I durchführt.

6. Verbindungen der Formel

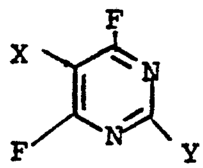

(XXIV)

worin

X = H, F, Cl oder Br

Y = $CF_3$ oder 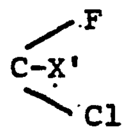 , worin X' = H, F, Cl oder Br,

mit der Maßgabe, daß falls Y = $CF_3$ ist, X für F steht.

7. Verfahren zur Herstellung von Verbindungen der Formel

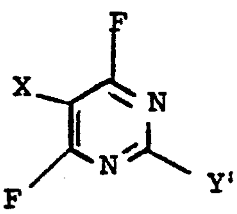

(XXIVa)

worin X = H, F, Cl oder Br
und Y' = $CFCl_2$ oder $CF_2Cl$,

dadurch gekennzeichnet, daß man

a) Zum Erhalt von Verbindungen der Formel (XXIVa)

worin Y' = $CFCl_2$ Verbindungen der Formel

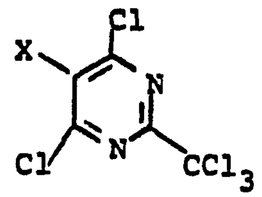

(XXVa)

mit Fluorwasserstoff unter Druck umsetzt und das entstehende Reaktionsgemisch durch physikalische Methoden (insbesondere durch Destillation) auftrennt,

b) zum Erhalten von Verbindungen der Formel (XXIVa), worin Y' = $CF_2Cl$ Verbindungen der Formel

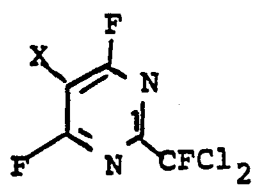

(XXVb)

mit Metallfluoriden, wie $SbF_3$ oder KF umsetzt und das entstehende Reaktionsgemisch durch physikalische Methoden (insbesondere durch Destillation) auftrennt.

8. Verwendung von Farbstoffen gemäß Ansprüchen 1 bis 4 zum Färben und Bedrucken von Substraten.

9. Mit Farbstoff gemäß Ansprüchen 1 bis 5 gefärbtes oder bedrucktes Substrat.